(19) **Europäisches Patentamt / European Patent Office / Office européen des brevets**

(11) **EP 2 632 058 B1**

(12) **EUROPEAN PATENT SPECIFICATION**

(45) Date of publication and mention
of the grant of the patent:
**13.01.2016 Bulletin 2016/02**

(51) Int Cl.:
***H04B 7/06*** *(2006.01)*

(21) Application number: **12305220.1**

(22) Date of filing: **24.02.2012**

(54) **Apparatus, method and computer program for providing a composite beampattern**

Vorrichtung, Verfahren und Computerprogramm zur Bereitstellung eines Verbund-Strahlungsdiagramms

Appareil, procédé et programme informatique pour fournir une forme de faisceau composite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2013 Bulletin 2013/35**

(73) Proprietor: **ALCATEL LUCENT**
**92100 Boulogne-Billancourt (FR)**

(72) Inventors:
• **Jeschke, Michael**
**70184 Stuttgart (DE)**

• **Lange, Keld**
**75443 Ötisheim (DE)**

(74) Representative: **Knecht, Ulrich Karl et al**
**Alcatel Lucent**
**Intellectual Property & Standards**
**70430 Stuttgart (DE)**

(56) References cited:
**EP-A1- 2 009 811 EP-A1- 2 149 992**
**US-A1- 2003 092 402 US-A1- 2009 058 725**

**Description**

Embodiments of the present invention generally relate to wireless communication systems, and particularly to digital beamforming concepts for wireless communications.

Background

Demands for higher data rates for mobile services are steadily increasing. At the same time modern mobile communication systems, as 3rd Generation (3G) systems, such as the Universal Mobile Telecommunications System (UMTS), and 4th Generation (4G) systems, such Long-Term Evolution (LTE), provide enhanced technologies, which enable higher spectral efficiencies and allow for higher data rates and cell capacities. For example, such technologies include beamforming with so-called Adaptive Antenna Arrays (AAA).

In many applications of antennas, point-to-point (p-t-p) communication is of interest. For that purpose, a highly directive antenna beam or antenna pattern may be used to advantage. A directional antenna beam may be realized by forming an antenna array comprising a plurality, i.e., at least two, of antenna elements or elemental radiators. For example, the individual antenna elements may be spaced $\lambda/2$ apart, wherein $\lambda$ denotes the wavelength corresponding to a system carrier frequency $f_c$ of the wireless signal. As the directivity of the antenna (array) increases, its gain also increases, leading to less required amplifier power, to less interference and/or to increased data throughput. The individual antenna elements of an antenna arrays may be aligned vertically and/or horizontally or one.

An adaptive antenna array or an adaptive antenna array processor may be regarded as a functional entity that comprises a digital interface on one side. This digital interface may, for example, be the so-called fiber-based Common Public Radio Interface (CPRI), which defines an internal digital interface of base stations between Radio Equipment Controllers (REC) to local or remote radio units, also known as Radio Equipment (RE). On the other end, the adaptive antenna array processor may also comprise a Radio Frequency (RF) interface to or from RF components, such as the individual antennas or antenna elements. In downlink (DL), i.e. the direction from a base station to a mobile terminal, an adaptive antenna array processor may receive digital Inphase (I) and Quadrature (Q) baseband samples, e.g. via CPRI from a modem board of the base station, which may also be referred to as NodeB or eNodeB, according to the 3rd Generation Partnership Project (3GPP) terminology. The received I/Q baseband samples of the digital baseband signal may be processed in some way in the digital baseband domain, typically by applying complex valued beamforming weight coefficients to the digital baseband signal. Finally, the adaptive antenna array processor may perform a Digital-to-Analogue (D/A) conversion and up-conversion or up-mixing of the weighted signal to the system carrier frequency per antenna element, each of which may be driven by a dedicated Power Amplifier (PA).

In a vertically arranged adaptive antenna array, which will be exemplarily assumed throughout this specification without loss of generality, one vertical column of $N_{elem}$ vertically arranged co-polarized antenna elements may be fed by $N_{PA}$ power amplifiers, where $N_{PA} \geq 2$. How the mapping between the $N_{PA}$ power amplifiers and the $N_{elem}$ antenna elements is done is not important for the scope of the present specification. For example, there may be a 1:1 mapping, i.e., $N_{elem} = N_{PA}$. Another example is that one power amplifier may be mapped to two or more radiating antenna elements. Yet another example, the most general case, is that there is a passive Corporate Feeder Network (CFN) that maps the weighted radio signals from the $N_{PA}$ power amplifiers to the $N_{elem}$ antenna elements. Such a feeder network may be expressed by an ($N_{elem}$ x $N_{PA}$) matrix. With such a feeder network, each power amplifier may be mapped to a certain number of physical antenna elements (some antenna elements might be shared by different power amplifiers when there are combiners in the feeder network), and therefore each power amplifier may be associated with a "logical antenna".

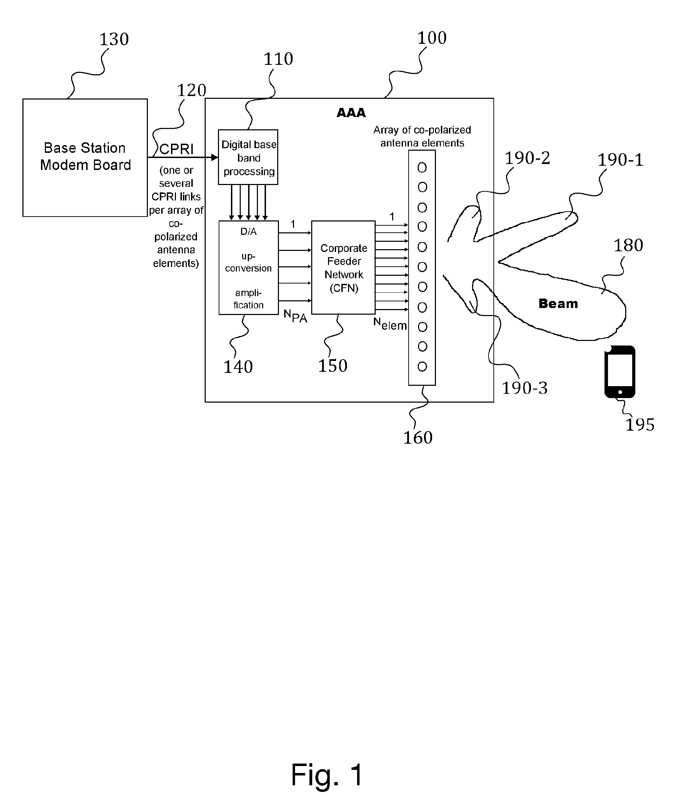

For the sake of the present specification, the value $N_{elem}$ is of no relevance, only $N_{PA}$ is relevant, i.e. the implementation of embodiments of the present invention will only be aware of $N_{PA}$, not of $N_{elem}$. Fig. 1 illustrates the framework of embodiments of the invention and the main functional elements of an adaptive antenna array processing device. Note that an adaptive antenna array processing device normally comprises more than one column of co-polarized antenna elements - only one such column is depicted Fig. 1.

Fig. 1 shows a possible configuration of an adaptive antenna array 100 comprising a digital baseband processing unit 110, which is operable to process digital baseband signals in the digital baseband domain. The digital baseband signals are fed to the digital baseband processing unit 110 via a serial digital baseband interface 120 connecting the adaptive antenna array 100 to a so-called Radio Equipment Control (REC) entity 130, which may be a base station modem board, for example. In this context the adaptive antenna array 100 may also be regarded as a Radio Equipment (RE), which may be provided with baseband signals and/or controlled by the REC entity 130 via the digital baseband interface 120, e.g. CPRI. Both, the REC and the RE subsystems belong to a radio base station system and may be either co-located within a single cabinet or spatially separated. In the latter case, the adaptive antenna array 100 may be regarded as a remote unit, which may be spatially located at a different place than the REC entity 130. The adaptive antenna array 100 also comprises, for the downlink direction, a radio front-end 140, which performs a Digital-to-Analog (DA) conversion of the signals coming from the digital baseband processor 110, an up-conversion to the RF-band, and amplification of the analog signals of the $N_{PA}$ signal branches. From the radio front end 140 the $N_{PA}$ analog signals are fed to an array of $N_{elem}$ co-polarized antenna elements 160 via an aforementioned Corporate Feeder Network (CFN) 150.

In conventional beamforming or adaptive antenna array concepts, an antenna pattern or beam, which is characterized e.g. by its beam direction (= downtilt) and its beam width, may be defined by a set of complex coefficients $w_a$, where $a = 0,..., N_{PA}$-1 denotes the index of the power amplifier, assuming a vertical array of $N_{elem}$ co-polarized antennas with their associated $N_{PA}$ power amplifiers. These coefficients are applied in the digital baseband processor 110 of the adaptive antenna array unit 100. Conventionally, the same set of complex weights is applied over a complete system bandwidth according to the baseband sampling frequency, which is typically 7.68, 15.36 or 30.72 MHz for the most common LTE system bandwidths of 5, 10 or 20 MHz. Moreover, a conventional beam shape is characterized by one "main lobe" 180 that is directed towards an optimum angle (downtilt) for maximum gain or directivity according to radio network planning, yielding sub-optimum coverage towards directions 190-1, 190-2, 190-3 outside this main lobe.

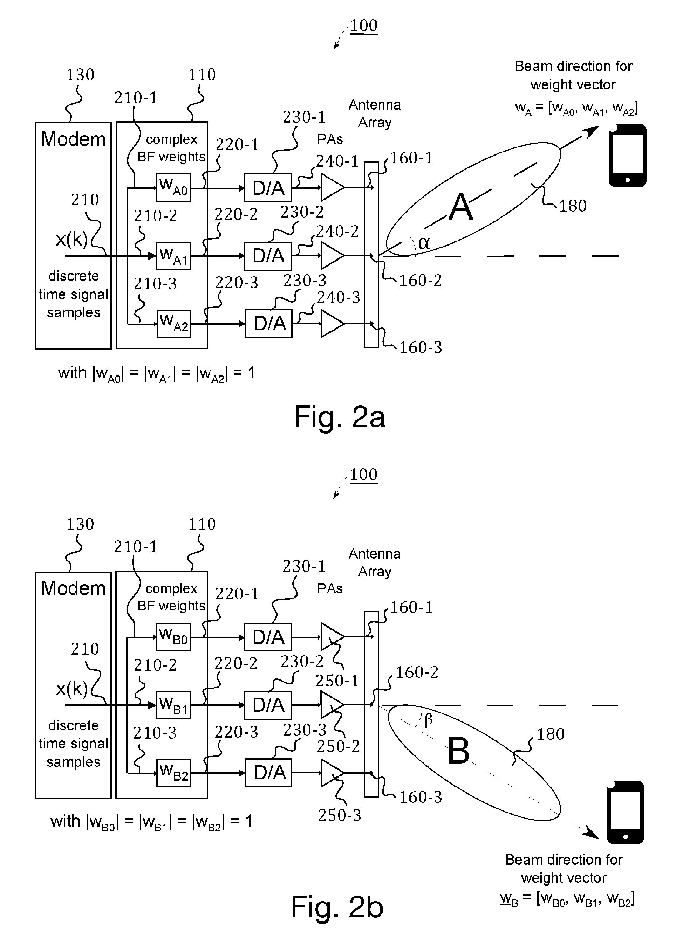

Today, various AAA concepts and roadmaps exist that may improve system coverage or capacity. Such systems are, for example, described in EP 2 009 811 A1, EP 2 149 992 A1 or US 2009/058725 A1. For example, adaptive antenna arrays may be used for differential downtilt or beam shape in DL and Uplink (UL). This is shown in in Figs. 2a, b.

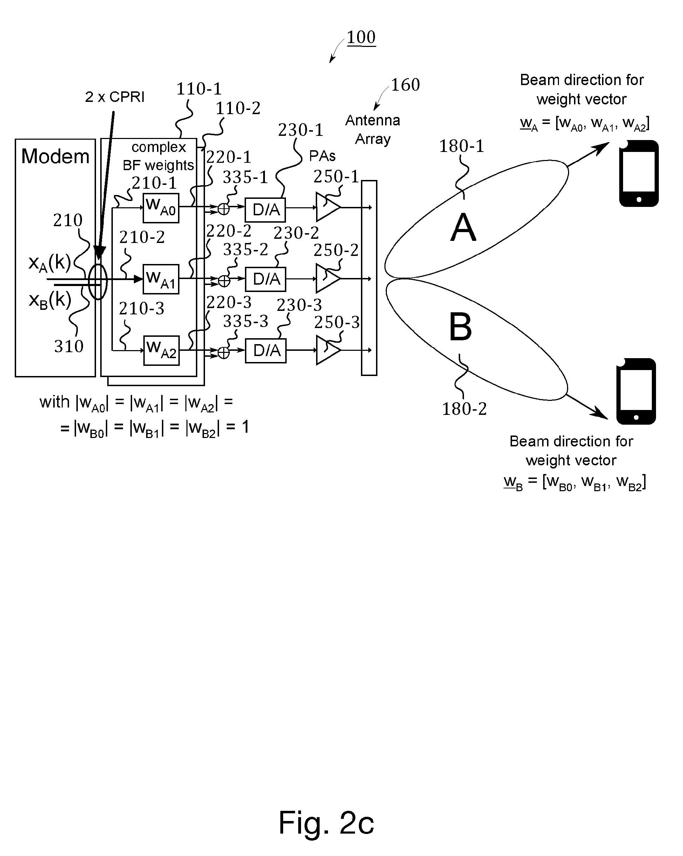

Fig. 2a shows a REC entity 130 in form of a modem device which is coupled to a digital baseband processing unit 110 of an AAA processor 100. Discrete time signal samples $x(k)$ of a cell-specific signal 210 covering the whole useful system bandwidth of a communication system are transferred from the modem 130 to the digital baseband processor 110 via one cell-specific CPRI link. The digital baseband signal $x(k)$ 210 is exemplarily branched into three signal branches 210-1, 210-2 and 210-3, wherein each signal branch 210-1, 210-2, 210-3 is weighted with a complex beamforming weight coefficient $w_{Aa}$, with $a = [0, 1, ..., A$-1] and $|w_{Aa}| = 1$, to obtain weighted signal versions 220-1, 220-2, and 220-3 of the signal 210. Note that the variable $A = N_{PA}$ denotes the number of signal paths or power amplifiers, while the label "A" is dedicated to "beam A" in Fig. 2. Each of the weighted signal versions 220-1, 220-2, and 220-3 is digital-to-analog converted by the DAC's 230-1, 230-2, and 230-3 to obtain analog versions 240-1, 240-2, and 240-3 of the weighted digital signals 220-1, 220-2, and 220-3 corresponding to signal branches 210-1 to 210-3. Each of the analog signals 240-1, 240-2, and 240-3 traveling in the three signal branches is amplified by means of a corresponding power amplifier 250-1, 250-2, and 250-3 before being radiated by an antenna array 160 (here exemplarily comprising three antenna elements 160-1, 160-2, 160-3). The complex beamforming weights $w_{Aa}$, with $a = [0, 1, ..., A$-1] correspond to a beampattern A comprising exactly one main lobe 180 facing in a first angle $\alpha$. Therefore the complex beamforming weights may also be referred to as main lobe specific beamforming weight coefficients. Note that the digital baseband signal $x(k)$ 210 is radio cell specific, i.e. comprises all signal components to be transmitted to the associated radio cell, and comprises all frequencies of a useful system bandwidth, which may be 5, 10 or 20 MHz for LTE networks, for example. In the example of LTE, the digital baseband signal $x(k)$ 210 may hence comprise all subcarriers of the LTE signal.

Fig. 2b differs from Fig. 2a in that the main lobe specific beamforming weight coefficients $w_{Ba}$, with $a = [0, 1, ..., A$-1] and $|w_{Ba}| = 1$, for beam B are chosen differently leading to a main lobe 180 facing into a different angle $\beta$. Thereby, in case of a vertical antenna array 160, the two angles $\alpha$ and $\beta$ may denote different electrical downtilts of the antenna array 160, respectively.

The AAA described referring to Fig. 2a and Fig. 2b feature is a key base characteristic for any AAA solution. It improves flexibility in network planning and removes the necessity to make compromises between DL and UL beam design. Embodiments of the present invention may fully co-operate with this conventional AAA base feature. Embodiments can be independently used in DL and UL and therefore make full use of the known feature of "differential DL and UL beam", and further improves it.

Another known adaptive antenna array concept is so-called "vertical sectorization", i.e., two vertically separated cell IDs in one horizontal sector, which is already supported by LTE Rel-8. This concept is illustrated in Fig. 2c.

Fig. 2c illustrates the concept of vertical sectorization, wherein each of the two main beams 180-1 and 180-2 corresponds to a different cell-ID, respectively. That is to say, beam 180-1, which is associated to the first main lobe specific beamforming weight coefficient $w_{Aa}$, with $a = [0, 1, ..., A$-1] and $|w_{Aa}| = 1$, corresponds to a first cell-ID specific digital baseband signal $x_A(k)$ 210 delivered to a first digital signal processing unit 110-1 of the AAA 100 via a first CPRI interface. Correspondingly, the second beam 180-2, which is associated to the second main lobe specific beamforming weight coefficient $w_{Ba}$, with $a = [0, 1, ..., A$-1] and $|w_{Ba}| = 1$, is associated to a second cell-ID specific digital baseband signal $x_B(k)$ 310, which is delivered to a second digital baseband processor 110-2 of the AAA unit 100 via a second dedicated CPRI interface. Each of the two different cell specific digital baseband signals 210, 310 is weighted with main lobe specific beamforming vectors $\mathbf{w}_A = [w_{A0}, w_{A1}, w_{A2}]$ or $\mathbf{w}_B = [w_{B0}, w_{B1}, w_{B2}]$, to obtain first and second weighted signal branches 220-1, 220-2, 220-3 and 320-1, 320-2, 320-3 of the two digital baseband signals 210 and 310. The weighted signal versions 220-1, 320-1 and 220-2, 320-2, and 220-3, 320-3 may be superimposed or combined by digital adders 335-1, 335-2, and 335-3, respectively, before being digital-to-analog converted, amplified and radiated via their associated cell-ID specific beampatterns 180-1 and 180-2. Since it can be assumed that the two cell-ID specific digital baseband signals 210 and 310 are mutually uncorrelated (for different cell-IDs the property of signals being uncorrelated is evident because different data and different Constant Amplitude Zero Autocorrelation (CA-ZAC) sequences with low cross-correlation are used in different cell IDs), the digital summation points 335 are incoherent, i.e. all three power amplifiers 250-1 to 250-3 will process a signal of identical power. This balanced situation is desirable from a PA usage point of view.

This straight-forward AAA feature of Fig. 2c is currently discussed to improve capacity/coverage. However, it has the following drawbacks: Vertical sectorization requires twice the number of CPRI links between modem (base station) and RRH/AAA, it requires modified modem software (support of two cells instead of one, per horizontal sector). Also, there are unknown "reality losses" between simulations and real world, due to large overlap region between outer and inner beam (= outer/inner vertical sector) with correspondingly high interference and potential handover problems.

An adaptive antenna array redundancy concept entails a graceful degradation of the DL beam upon failure of a power amplifier (PA). This means that, depending on which PA fails, the beam shape becomes sub-optimum compared to the ideally designed beam shape.

Hence, it is desirable to provide an adaptive antenna array concept which may further improve the aforementioned state of the art.

## Summary

It is one finding of the present invention to apply a different beam shape to a baseband or RF signal to be received or transmitted within a specific radio cell than in conventional beamforming concepts. Thereby, the beamforming according to embodiments may be done for the whole useful signal bandwidth of a signal comprising radio cell specific data. The cell specific signal, which may comprise data of multiple users, may be transferred between a RE and a REC entity via a single signal interface, e.g. the CPRI. Instead of using a conventional beam with a single main lobe per cell-specific signal to be transmitted or received via the antenna array, a beam or an antenna pattern with $M$ main lobes may be applied per cell-specific signal, wherein $M$ denotes an integer number equal to or larger than two. Typically, $M$ may be chosen to be two or three, i.e., $M = 2$ or $M = 3$. In other words, each of the two main lobes or base beams of a composite beampattern according to embodiments both correspond to the same cell-ID, respectively. Embodiments aim to improve coverage outside a conventional single-beam main lobe, while possibly sacrificing some gain or directivity towards the conventional main lobe direction. However, this is considered to be only a small disadvantage in interference limited scenarios.

It is a further finding that some embodiments directed towards vertical beamforming scenarios may maintain a steepness of a main lobe at the boundary towards a neighbor cell, in contrast to the conventional approach of simply choosing a larger beam-width which worsens the interference created towards a neighbor cell. Embodiments may generate better coverage towards the direction of the at least one "new" beam peak and can thereby improve overall system cell capacity.

It is a further finding to create this "multi-peak" antenna beampattern ("double-peak" for $M = 2$) by superimposing at least two (or multiple) individual beams ("base beams"), which are applied to a single data stream essentially covering the whole system bandwidth. However, this may result in unequal power weights for the different PAs of the antenna array, which is normally not desired in conventional approaches.

The present invention is defined by an apparatus according to claim 1, a method according to claim 13 and a computer program according to claim 14.

According to a first aspect of the present invention it is provided an apparatus for providing a composite beampattern for at least two antenna elements coupled to at least two signal branches of a baseband or RF signal, the composite beampattern having at least two main lobes pointing in different spatial directions. The apparatus comprises means for forming the composite beampattern for the signal by superimposing at least two individual beampatterns provided by the at least two antenna elements, wherein each of the at least two individual beampatterns has a main lobe, wherein the at least two main lobes of the at least two individual beampatterns point in different spatial directions, respectively.

According to embodiments the least two antenna elements are both feedable with the baseband or RF signal, which is using radio resources of a radio resource set. The radio resource set comprises at least a first radio resource subset associated to a first plurality of users and a second radio resource subset associated to a second plurality of users of a cellular communication system. Thereby first and the second plurality of users are both associated to the same cell of the cellular communication system. In other words, the signal is associated to a plurality of users being served by the at least two antenna elements being associated to the same cell of the cellular communication system. Hence, the signal may also be referred to as cell-specific signal in the sequel.

The beamforming or the composition of the individual non-overlapping beampatterns may either be done digitally in the digital baseband domain or analogous/mechanically. One possible analog or mechanical approach may be to form the composite beampattern by mechanically coupling the at least two antenna elements in form of at least two directional antennas together to a composite antenna, wherein each of the at least two antenna elements or directional antennas has a predefined individual beampattern preferably but not necessarily with a single main lobe, wherein the at least two single main lobes of the individual patterns point in different spatial directions. That is to say, the term "antenna element" may be understood as an individual antenna device that is able to transmit and/or receive (radiate) a Radio Frequency (RF) signal. Therefore, an antenna element may either be an individual directional or omnidirectional antenna or an element of an antenna array comprising a plurality of closely-spaced antenna elements.

Also, the beamforming or the composition of the individual non-overlapping beampatterns may be performed horizontally, vertically or as a combination thereof. In some embodiments it is of particular interest to perform a vertical beamforming for the signal with the at least two antenna elements. Thereby, vertical beamforming in the context of the present invention shall be understood as superimposing at least two different, preferably non-overlapping beampatterns, each having a different antenna pattern with a different downtilt angle of an associated main lobe, in order to obtain a composite beampattern with at least two main lobes, each main lobe facing towards ground in different downtilt angles. In other words, a first one of the at least two individual beampatterns may have a first main lobe with a different downtilt than a second main lobe of a second one of the at least two individual beampatterns.

Embodiments also provide an apparatus for digitally forming the beampattern of an antenna array, wherein the antenna array comprises at least two antenna elements, which are coupled to at least two signal branches of a digital baseband signal. The digital baseband signal is associated to a plurality of users being served by the same cell of the cellular communication system via the antenna array. The formed beampattern comprises at least two main lobes in different spatial directions, wherein each main lobe corresponds to a main lobe specific weighting or beamforming vector comprising at least two main lobe specific weighting or beamforming coefficients. The apparatus may comprise an interface for the digital baseband signal, the digital baseband signal being processed or digitally weighted in the at least two signal branches. Also, the apparatus may comprise an antenna weight processor, which is operable to determine and/or apply, for each of the at least two signal branches of the digital baseband signal, a signal branch specific composite weighting coefficient for the digital baseband signal. Thereby the antenna weight processor is operable to determine each signal branch specific composite weighting coefficient based on a superposition of at least two main lobe specific weighting coefficients, wherein each main lobe specific weighting coefficient corresponds to a different one of the at least two main lobes.

The antenna array may principally be an arbitrarily arranged antenna array comprising a plurality of spatially arranged and electrically interconnected co-polarized antennas or antenna elements to produce a directional radiation or beampattern. Thereby, the individual antenna elements may be arranged one-dimensional, e.g. as a linear vertical or horizontal antenna array, two-dimensional as a planar antenna array, or even three-dimensional. An inter-antenna-element spacing may be in the range of $\lambda/2$ or $0.8\lambda$, for example.

Embodiments of the present invention are in principle applicable to both uplink and downlink communication, wherein the uplink refers to the communication direction from a mobile terminal to a base station of a wireless communication system and the downlink refers to the communication direction from the base station to the mobile terminal. The wireless or cellular communication system may, for example, correspond to one of the wireless communication systems standardized by 3GPP, as Universal Terrestrial Radio Access Network (UTRAN) or Evolved UTRAN (E-UTRAN), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Orthogonal Frequency Division Multiple Access (OFDMA), Code Division Multiple Access (CDMA), etc. In the following the terms wireless communication system and cellular communication network are used synonymously.

In some embodiments, the antenna array may be coupled to a mobile terminal and the apparatus for forming the beampattern may be implemented in the mobile terminal, which forms the mobile or wireless end of one of the above networks. The mobile terminal may be a smartphone, a cell phone, a User Equipment (UE), a laptop, a notebook, a personal computer, a Personal Digital Assistant (PDA), an Universal Serial Bus (USB) - stick, a car, etc. A mobile terminal may also be referred to as UE in line with the 3GPP terminology.

In other embodiments, the at least two antenna elements or the antenna array may be directly or indirectly coupled to a base station and the apparatus for forming the beampattern may be, as a Radio Equipment (RE) entity, implemented in or coupled to the base station. A base station may correspond to a remote radio head, an access point, a macrocell, a small-cell, a micro-cell, a femto-cell, etc. A base station transceiver can be a wireless interface of a wired network, which enables transmission of radio signals to a user equipment or mobile transceiver. Such a radio signal may comply with radio signals as, for example, standardized by 3GPP or, generally, in line with one or more of the above listed systems. Thus, a base station may correspond to a NodeB, an eNodeB, an access point, etc.

According to an embodiment the antenna array may be a vertical antenna array associated to a base station of a cellular communication system, wherein the base station, and, hence, the antenna array, serves a radio cell of the cellular communication system. By means of the determined or applied composite beamforming vector a composite downtilt of the composite beampattern with the at least two main lobes from the vertical antenna array may be adjusted. The composite beampattern with the at least two main lobes for radiating the cell-specific multi-user signal via at least two downtilt angles may, hence, improve system coverage compared to conventional systems with only one antenna downtilt angle for radiating the signal.

The composite beampattern with the at least two main lobes may be formed by the antenna weight or beamforming processor for a whole or complete useful signal bandwidth of the cell-specific multi-user digital baseband signal using a plurality of radio resources within said useful signal or system bandwidth. The term radio resources may be understood as an element or a combination of elements of the group of a frequency resource, a bandwidth, a carrier, a sub-carrier, a time resource, a radio frame, a time slot, a symbol, a sub-frame, a Time Transmission Interval (TTI), a code resource, an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spread Spectrum (FHSS) sequence, a Direct Sequence Spread Spectrum (DSSS) sequence, etc. In embodiments the plurality of radio resources may thus correspond to one of or a combination of the group of time resources, frequency resources, coding resources or transmission techniques. For example, a Data Radio Bearer (DRB) also comprises a combination of physical radio resources and, hence, may be regarded as a radio resource itself.

The cell-specific (digital baseband) signal may hence be compliant to one of the aforementioned wireless communication systems. For example, the cell-specific (digital baseband) signal may be a WCDMA signal compliant to the UMTS standard or it may by an OFDM signal compliant to the LTE standard. According to embodiments the digital baseband signal may be provided to the apparatus for forming the "multi-peak" or "multi-main-lobe" beampattern via a single digital baseband interface dedicated to a single radio cell. That is to say, the interface may be a digital baseband interface, such as, for example, the Common Public Radio Interface (CPRI), operable to receive and/or transmit the digital baseband signal from or to a cell-specific modulator-demodulator (modem) device coupled to the apparatus. For the downlink scenario, for example, the digital baseband signal may comprise useful data for all users served by the associated radio base station.

In embodiments the antenna weight processor may be operable to determine the signal branch specific composite weighting coefficients for the digital baseband such that a first signal branch specific composite weighting coefficient of a first signal branch has a different amplitude than a second signal branch specific composite weighting coefficient of a second signal branch. This typically results in a different or unequal power distribution between the at least two signal branches of the cell-specific signal, which may be coupled to the antenna array via signal branch specific power amplifiers and/or a passive Corporate Feeder Network (CFN), as has been explained before with reference to Fig. 1.

The unequal power distribution results from the antenna weight processor being operable to determine or select each of the at least two signal branch specific composite weighting coefficients for the digital baseband signal based on a weighted sum of at least two main lobe specific weighting coefficients, respectively. Thereby a number of the main lobe specific weighting coefficients per signal branch or power amplifier corresponds to a number of individual (base) beampatterns that shall be superimposed. Each of the at least two of main lobe specific weighting coefficients may have an absolute value of one. In other words, the antenna weight processor may be operable to determine a signal branch specific composite weighting coefficient $w_a$ of signal branch $a$ corresponding to

$$ w_a = \sum_{m=0}^{M-1} e^{j\varphi_m(t)} w_{a,m} \, , a = [0, 1, \ldots, A\text{-}1], \qquad (1) $$

wherein $A$ denotes the number of signal branches or power amplifiers associated to the at least two antenna elements (hence, $A$ may also be regarded as $N_{PA}$ according to some embodiments), $M$ denotes the number of individual base beampatterns or (desired) main lobes of the composite pattern, $\varphi_m(t) \in [0, 2\pi]$ denotes a possibly time dependent phase term corresponding to main lobe $m$, and $w_{a,m}$ denotes a typically complex-valued main lobe specific or base beampattern specific weighting coefficient of signal branch $a$ and main lobe (base beampattern) $m$, with $|w_{a,m1}| = |w_{a,m2}|$ (m1, m2 $\in$ [0, 1, ..., $M$-1]). For example, for the exemplary case of $M = 2$, the resulting signal branch specific composite weighting coefficient $w_a$ of signal branch $a$ may have an absolute value of two, i.e. $|w_a| = 2$, in case of constructive superposition of the two main lobe specific weighting coefficients $w_{a,0}$ and $w_{a,1}$, $a = [0, 1, ..., A$-1]. On the other hand, the absolute value of the signal branch specific composite weighting coefficient $w_{a+1}$ of signal branch $a+1$ may be close to zero because of a more destructive superposition of the two main lobe specific weighting coefficients $w_{a+1,0}$ and $w_{a+1,1}$.

According to some embodiments, this unequal power distribution between the signal branches may be taken advantage of by over-dimensioning the power amplifier's output powers accordingly and/or realizing an improved redundancy concept against power amplifier failure. For that purpose the antenna weight processor may be operable to determine at least one set of phase term $\varphi_m \in [0, 2\pi]$ ($m = [0, 1, ..., M$-1]) corresponding to main lobes or base beampatterns $m$, such that the signal branch specific composite weighting coefficient $w_a$ of signal branch $a$ becomes essentially zero if, e.g., the power amplifier of branch $a$ ($a = [0, 1, ..., A$-1]) fails. This may be preferably done when the antenna array is coupled to at least three signal branches or power amplifiers thereof.

Hence, for the only exemplary case of $A = 3$ signal branches and $M = 2$ base beampatterns or main lobes of the desired composite beampattern, embodiments propose to construct the composite beamforming weight vector $\mathbf{w} = [w_0 \ w_1 \ w_2]^T$ as a sum of two individual main lobe specific weight vectors $\mathbf{w}_A = [w_{A0} \ w_{A1} \ w_{A2}]^T$ and $\mathbf{w}_B = [w_{B0} \ w_{B1} \ w_{B2}]^T$, corresponding to two distinct non-overlapping base beams or main lobes. In this summing operation $\mathbf{w}_B$ may be phase-rotated with a constant scalar factor $e^{j\varphi B}$, i.e.

$$\mathbf{w} = [w_0 \ w_1 \ w_2]^T = \mathbf{w}_A + e^{j\varphi B} * \mathbf{w}_B. \tag{2}$$

If it is assumed that all individual complex beamforming weights ($w_{A0}$ to $w_{B2}$) have the same magnitude but different phases, then, by appropriate selection of $\varphi_B$, it is always possible to make one of the resulting composite weighting coefficients of $[w_0, w_1, w_2]$ equal to zero. This means, that if one power amplifier of a signal branch fails, it is possible to select $\varphi_B$ such that the associated weight coefficient becomes zero. So the failed power amplifier will not be needed anyway. More generally, this scheme already works when $w_{Aa}$ and $w_{Ba}$ have the same magnitude for the same signal branch $a$=0, 1, 2, which would make it eligible also for arrays composed of differently dimensioned PAs.

The effect of selection of $\varphi_B$ on the resulting overall beam shape (the shape of the "multi-beam") is considered to be negligible, as long as the at least two "base beams" (labeled A and B) are non-overlapping, so the underlying assumption of this method is that full freedom can be used in the selection of $\varphi_B$ to force the resulting weight coefficient of one power amplifier to be zero without significantly impacting the shape of the composite or superimposed "multi-beam" pattern.

This means that some embodiments of the present invention may allow for a redundancy concept against single power amplifier failure that comes virtually without any impact on the composite beam shape. Note that embodiments of the present invention will work the more efficiently the more antenna elements and/or signal branches are available. Preferably, a number of antenna elements and/or signal branches (power amplifiers) coupled to the antenna elements is equal to or larger than five, i.e. $A \geq 5$.

As long as all signal branches or the power amplifiers thereof are fully operational, some embodiments may let the phase terms $\varphi_m(t) \in [0, 2\pi]$, $m = [0, 1, ..., M\text{-}1]$ change slowly over time, i.e., slow compared to Channel State Information (CSI) feedback cycles and scheduler delays, e.g. by 5° per 100ms. This allows for using each signal branch's power amplifier equally in the long term, thereby avoiding unequal aging of certain power amplifiers or uneven heat distributions on the AAA device. However, this requires an over-dimensioning of the PA power, for example by about 3dB in case of $M$= 2 main lobes or base beams. For any selection of $\varphi_m \in [0, 2\pi]$, $m = [0, 1, ..., M\text{-}1]$, the branch specific composite weight coefficient $w_a$ of signal branch $a$ with the highest magnitude will be up to 3 dB higher than the average weight level if all weights had equal power. Also, note that embodiments of the present invention are not at all limited to only two superimposed base beams ("double-beam") but can be enhanced to more than two superimposed base beams or main lobes. However, typically the number of base beams would be $M = 2$ or $M = 3$. For $M = 3$ base beams instead of just $M = 2$, the PA over-dimensioning would amount to ca. 4.8 dB rather than 3 dB.

According to further embodiments of the present invention the power amplifier imbalance may be avoided or at least reduced by introducing radio resource dependent composite weight coefficients instead of radio resource independent beamforming weights. For example, frequency dependent composite beamforming coefficients $w_a(f)$ ($a = [0, 1, ..., A\text{-}1]$) may be used. Hence, the antenna weight processor may be operable to determine each signal branch specific composite weighting coefficient $w_a(f)$ ($a = [0, 1, ..., A\text{-}1]$) based on a frequency selective superposition of the at least two main lobe or base beam specific weighting coefficients $w_{a,m}$, $a = [0, 1, ..., A\text{-}1]$ and $m = [0, 1, ..., M\text{-}1]$, such that the resulting composite beampattern comprises at least two frequency dependent main lobes in different spatial directions. For that purpose, the antenna weight processor may be operable to determine each of the at least two signal branch specific composite weighting coefficients $w_a(f)$ ($a = [0, 1, ..., A\text{-}1]$) based on a frequency selective weighted sum of at least two main lobe specific weighting coefficients $w_{a,m}$ ($a = [0, 1, ..., A\text{-}1]$, $m = [0, 1, ..., M\text{-}1]$), respectively, a number $M$ of the main lobe specific weighting coefficients per signal branch corresponding to a number of main lobes or base beams of the composite beampattern, wherein each of the at least two of main lobe specific weighting coefficients has an absolute value of one. In other words, the antenna weight processor may be operable to determine a frequency selective signal branch specific composite weighting coefficient $w_a(f)$ ($a = [0, 1, ..., A\text{-}1]$) of signal branch $a$ corresponding to

$$w_a(f) = \sum_{m=0}^{M-1} e^{j\varphi_m(f)} w_{a,m} \ , \ a = [0, 1, ..., A\text{-}1], \tag{3}$$

wherein $A$ denotes the number of signal branches associated to the at least two antenna elements, $M$ denotes the number of base beams or desired main lobes, $\varphi_m(f) \in [0, 2\pi]$ denotes a phase term corresponding to main lobe $m$ and depending on frequency $f$, and $w_{a,m}$ denotes a frequency-independent real- or complex-valued main lobe specific weighting coefficient of signal branch *a* and main lobe *m*, wherein $|w_{a,m1}| = |w_{a,m2}|$ (for any m1, m2 $\in$ [0, 1, ..., *M*-1]).

According to some embodiments the antenna weight processor may operable to determine the phase term $\varphi_m(f)$ corresponding to base beam or main lobe *m* and depending on frequency *f* based on a relation between the frequency *f* and a useful signal bandwidth of the multi-user digital baseband signal. In some embodiments the multi-user digital baseband signal may correspond to an Orthogonal Frequency Multiplex Division (OFDM) based digital baseband signal using or employing a plurality of subcarrier frequencies within the useful signal or system bandwidth. This may, for example, be the case for a LTE system. For example, for an OFDM system the antenna weight processor of the beamforming apparatus may be operable to determine the frequency or subcarrier dependent phase term $\varphi_m(f)$ according to

$$\varphi_m(f) = 2\pi * f/f_{\mathrm{BW}} * m/(M\text{-}1) + \varphi_{\mathrm{const},m} \;, \tag{4}$$

wherein *M* denotes the number of main lobes or base beams of the composite beampattern, *m* denotes the *m*-th main lobe or base beam, *f* denotes a subcarrier index, $f_{\mathrm{BW}}$ denotes the useful signal bandwidth in units of subcarriers, and $\varphi_{\mathrm{const},m}$ denotes an arbitrary constant phase term for the *m*-th main lobe or base beam, which may be set to zero for *m* = 0 without loss of generality. Of course Eq. (4) or something similar may also be applied to other forms of multiplexing signals, such as, e.g. WCDMA signals. In the latter case *f* denotes a frequency portion or position within the useful WCDMA signal bandwidth $f_{\mathrm{BW}}$, such that $f/f_{\mathrm{BW}} \in$ [0 ... 1]. That is to say, *f* = 0 for the lower end of the signal bandwidth $f_{\mathrm{BW}}$ and $f = f_{\mathrm{Bw}}$ for the upper end of the signal bandwidth.

Hence, according to some embodiments the idea is to make $\varphi_m$ a function of the frequency (or subcarrier), $\varphi_m(f)$, thereby averaging out low and high magnitudes of each composite weight coefficient $w_a(j)$ (*a* = [0, 1, ..., *A*-1]), such that the time domain signal is of equal strength on each PA at any time. In order to achieve perfectly matched PA usage on all *A* power amplifiers, and assuming the general case of *M* "base beams" (typically *M* = 2 or *M* = 3), the function $\varphi_p(f)$, *m*=0...*M*-1, may be of the form according to Eq. (4), wherein $f_{\mathrm{BW}}$ is the useful bandwidth of the system's signal in units of subcarriers, i.e. $f_{\mathrm{BW}}$ = 300, $f_{\mathrm{Bw}}$ = 600, or $f_{\mathrm{BW}}$ = 1200 for 5 MHz, 10 MHz, 20 MHz LTE system bandwidths, respectively. According to some embodiments it is also possible to let $\varphi_{\mathrm{const},m}$ vary slowly over time, in an arbitrary (e.g. random) manner, slowly relative to the feedback cycles of CSI (channel state information) feedbacks and Layer 2 scheduler delays, e.g., at a rate of -5° to +5° per 100ms.

The freqency dependent or frequency selective signal processing may, according to some embodiments, be done in the frequency domain. For that purpose the antenna weight processor may be arranged between a Fast Fourier Transform (FFT) processor and an Inverse Fast Fourier Transform (IFFT) processor to determine each of the at least two signal branch specific composite weighting coefficients $w_a(f)$ (*a* = [0, 1, ..., *A*-1]) based on the frequency selective weighted sum of the at least two main lobe specific weighting coefficients $w_{a,m}$ (*a* = [0, 1, ..., *A*-1], *m* = [0, 1, ..., *M*-1]) in the frequency domain. The FFT processor may thereby transform the cell-specific multi-user digital baseband signal coming via the digital baseband interface from time-domain into frequency-domain. The signal branch specific composite weighting coefficients $w_a(f)$ (*a* = [0, 1, ..., *A*-1]) may be determined via a table-lookup or computed and applied to at least two copies of the digital baseband signal in the frequency-domain, wherein each of the at least two copies or versions is associated to a different one of the at least two signal branches. After the weighting of the at least two copies of the digital baseband signal with the respective determined signal branch specific composite weighting coefficient $w_a(f)$ (*a* = [0, 1, ..., *A*-1]), the at least two weighted signal copies may be transformed back to the time-domain by an IFFT operation, respectively, before being amplified and fed to the antenna array.

When performing frequency dependent or independent beamforming for an OFDM data symbol in the frequency domain, it might be necessary to have knowledge on OFDM symbol boundaries. For this purpose, the antenna weight processor may be operable to detect OFDM symbol boundaries of data symbols of a data stream input to the antenna weight processor to apply the composite weighting coefficient for each of the at least two antenna elements to the data stream on an OFDM symbol basis. The detection of OFDM symbol boundaries may, however, require additional signaling from a REC entity or modem device coupled to the beamforming processor (RE entity).

In order to avoid such additional signaling it may be advantageous to perform the composite beamforming in the time domain, for example, by using Finite Impulse Response (FIR) filters. The antenna weight processor may hence comprise, for determining or applying each of the at least two signal branch specific composite weighting coefficients, at least one Finite Impluse Response (FIR) filter structure, to determine the frequency selective superposition of the at least two main lobe specific weighting coefficients in the time-domain. Thereby, a delay of the FIR filter structure may correspond to a delay $\Delta\tau = 1/f_S$ or multiples thereof, wherein $f_S$ denotes the sampling frequency of the digital baseband signal and may be slightly larger than the useful signal bandwidth $f_{\mathrm{BW}}$ of the cell-specific digital baseband signal. In some embodiments FIR filters, which are typically already available for calibrating the signal branches to the antenna elements, may additionally be used for determining the frequency selective signal branch specific composite weighting coefficients. In other words, the at least one FIR filter structure associated to one of the at least two signal branches may be operable, besides determining the frequency selective weighted sum of the at least two main lobe specific weighting coefficients for a signal branch, to calibrate said signal branch and/or an antenna element associated to the one of the at least two signal branches.

Hence, the frequency- or subcarrier-dependency of the composite beamforming coefficients $w_a(f)$ ($a = [0, 1, ..., A\text{-}1]$) may be implemented in the digital baseband of the AAA or beamforming processor and may be realized either in frequency domain by a sequence of FFT→complex multiplications→IFFT or in the time domain by FIR filters. The time domain approach may be preferred for some embodiments because it may work independently from OFDM symbol boundaries and can even be applied to WCDMA signals. In the time domain approach the FIR filter coefficients may be either real or complex valued, depending on the way the different FIR filters are arranged. Another advantage of the time domain implementation is that a AAA product typically contains FIR filters in the digital baseband anyway for the purpose of antenna array calibration. These calibration FIR filters may fully or partly be re-used for the purpose of realizing embodiments of the present invention.

Also note that the signal branch specific composite weighting coefficients $w_a(f)$ ($a = [0, 1, ..., A\text{-}1]$) and/or the main lobe (base beam) specific weighting coefficients $w_{a,m}$ ($a = [0, 1, ..., A\text{-}1]$, $m = [0, 1, ..., M\text{-}1]$) may be determined either by computation or by a table lookup of predetermined coefficients in a memory/storage device. In the latter case the determination may also be understood as an application of predetermined coefficients, respectively. Also hybrid determination concepts are conceivable.

To summarize, the ideas of embodiments of the present invention are introducing "double-peak" (or multi-peak) beams instead of "single-peak" beams with a AAA, yielding complex composite beamforming weight coefficients of different magnitude. Optionally, two techniques (the two cannot be used simultaneously) may be applied. Firstly, upon PA failure, the overlay of the two (or multiple) beams may be in such a way that the composite complex weight coefficient of this PA turns out to be exactly zero, such that the system gets robust against PA failures. Further, the complex composite beamforming weights may be made a function of the frequency or potentially other physical radio resources, such as time or codes, thereby creating equal power usage of all PAs in the time domain and avoiding unequal PA usage.

Note, that the aforementioned "multi-peak"-approach alone can also be realized by multiple conventional passive antennas with classical "single-peak" beams, being fed with the same cell-specific multi-user signal but pointing to different spatial directions, yielding, for example, different downtilts. Hence, according to a further aspect it is also provided an apparatus for forming a beampattern, the apparatus comprising at least two passive antennas (as the antenna elements) which may be coupled or are coupled to at least two signal branches of a common signal, particularly a common cell-specific signal provided via a single CPRI interface. The passive antennas are arranged such that a composite beampattern of the at least two passive antennas comprises at least two main lobes in different spatial directions. In case of a vertical antenna array the individual passive antennas may have different downtilts for providing coverage of at least a part of the cell.

According to yet a further aspect of the present invention it is provided a method for providing a composite beampattern for at least two antenna elements coupled to at least two signal branches of a common signal, the composite beampattern having at least two main lobes pointing in different spatial directions. The method comprises a step of forming the composite beampattern for the common signal by superimposing at least two individual beampatterns provided by the at least two antenna elements, wherein each of at least two individual beampatterns has a main lobe pointing in a different spatial direction, respectively. Also, the at least two individual beampatterns are preferably non-overlapping.

Some embodiments comprise electrical analog and/or digital control circuitry installed within the apparatus for performing the method, i.e. the beamforming apparatus. Digital control circuitry, e.g. a Digital Signal Processor (DSP) or a Field Programmable Gate Array (FPGA) needs to be programmed accordingly. Hence, yet further embodiments also provide a computer program having a program code for performing embodiments of the method, when the computer program is executed on a computer or a digital processor.

An adaptive antenna array in combination with a beamforming apparatus according to embodiments of the present invention can replace a conventional Remote Radio Head (RRH) plus passive antenna solution. It may offer more possibilities of optimizing a wireless radio network by providing more flexibility in network planning. Some advantages of adaptive antenna arrays are, for example, the capability to configure different beams, i.e. downtilts and/or beam shapes, in uplink (UL) and downlink (DL). On top of that, embodiments of the present invention may offer formerly unknown advantages that can be built into an adaptive antenna array product, addressing the important aspects of system capacity (and potentially coverage), ease of deployment (without modem change or increase of CPRI links, deployable even in 3rd party networks), or product lifetime (reliability, redundancy concept). Moreover, an adaptive antenna array according to embodiments of the present invention is not only applicable to OFDM-based (Orthogonal Frequency-Division Multiplexing) wireless communication systems, such as Long-Term Evolution (LTE), but also to CDMA-based (Code-Division Multiplexing) wireless communication systems, such as the Universal Mobile Telecommunications System (UMTS) or CDMA2000.

Embodiments of the present invention may provide an AAA solution that may increase cell capacity, and partly (indoor-) coverage. Embodiments are easily and quickly deployable in existing wireless communication networks. Embodiments do not require an increase in the number of CPRI links between modem board and an AAA processor. Also, embodiments open up the possibility for improved reliability (lifetime) by a new redundancy concept (depending on the chosen mode of operation). Further, embodiments may already be deployed with the first version of the LTE standard (LTE Rel-8). Yet further, embodiments may even be deployed in legacy networks, such GSM/EDGE, UMTS, CDMA2000, etc.

Brief description of the Figures

Some embodiments of apparatuses and/or methods will be described in the following by way of example only, and with reference to the accompanying figures, in which

Fig. 1 shows a conventional Adaptive Antenna Array entity interfacing a base station modem board via a single CPRI interface;

Fig. 2a,b show a conventional cell specific beamforming concept single main lobe beampatterns;

Fig. 2c shows a conventional vertical sectorization beamforming concept for two cell specific baseband signals, each having associated a conventional single main lobe beampattern;

Fig. 3 shows an embodiment of an apparatus for forming a multi-main-lobe beampattern of an antenna array, wherein the multi-main-lobe beampattern is associated to a single cell specific baseband signal;

Fig. 4 shows an embodiment of an apparatus for digitally forming a multi-main-lobe beampattern of an antenna array, wherein the multi-main-lobe beampattern is associated to a single cell specific baseband signal;

Fig. 5 shows an embodiment of an apparatus for forming a multi-main-lobe beampattern of an antenna array in the frequency domain;

Fig. 6a shows a first embodiment of an apparatus for forming a multi-main-lobe beampattern of an antenna array by means of FIR filter structures;

Fig. 6b shows a second embodiment of an apparatus for forming a multi-main-lobe beampattern of an antenna array by means of FIR filter structures; and

Fig. 6c shows a third embodiment of an apparatus for forming a multi-main-lobe beampattern of an antenna array by means of FIR filter structures.

Description of Embodiments

Various example embodiments will now be described more fully with reference to the accompanying figures in which some example embodiments are illustrated. In the figures, the thicknesses of lines, layers and/or regions may be exaggerated for clarity.

For the sake of conciseness please note that embodiments will be explained by the downlink, keeping in mind that all embodiments are also applicable for the uplink as well. Further, only the vertical beamforming case will be exemplified, keeping in mind that all embodiments are applicable for the horizontal direction as well.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

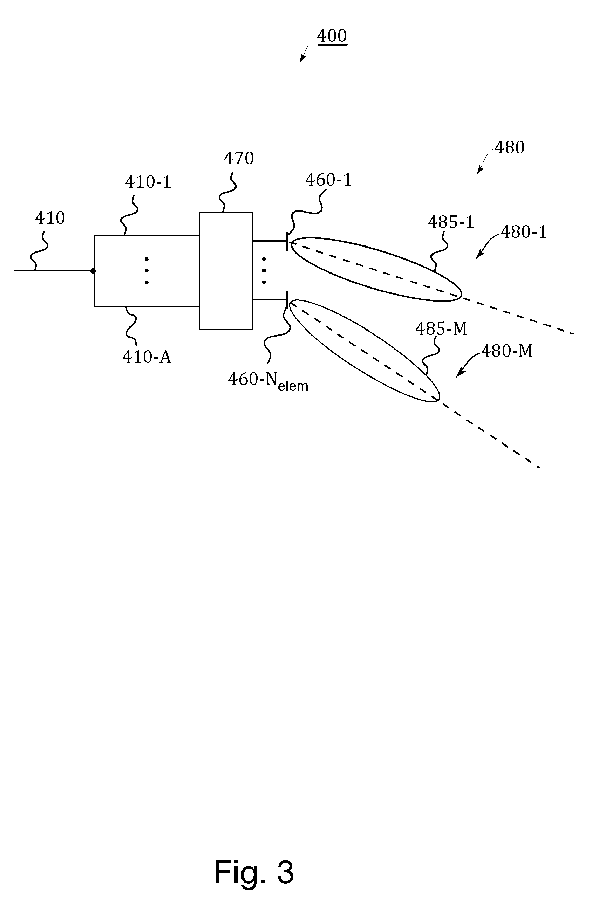

Fig. 3 schematically illustrates an apparatus 400 for providing a composite beampattern 480 of at least two antenna elements 460-1 to 460-$N_{elem}$ ($N_{elem} \geq 2$), which are coupled to at least two signal branches 410-1 to 410-$A$ ($A \geq 2$) of an analog or digital signal 410. The composite beampattern 480 has at least two main lobes 485-1 to 485-$M$ ($M \geq 2$), wherein each main lobe 485-$m$ ($m = [0, 1, ..., M$-1] or $m = [1, ..., M]$) is pointing in different spatial directions, respectively. The apparatus 400 comprises means 470 for forming the composite beampattern 480 associated to the common signal 410 by superimposing at least two individual base beampatterns 480-1 to 480-$M$ provided by the at least two antenna elements 460-1 to 460-$N_{elem}$, wherein each of the at least two individual base beampatterns 480-1 to 480-$M$ has may have a single main lobe 485-$m$ ($m = [0, 1, ..., M$-1] or $m = [1, ..., M]$), and wherein the at least two main lobes 485-$m$ ($m = [0, 1, ..., M$-1] or $m = [1, ..., M]$) of the at least two individual beampatterns 480-1 to 480-$M$ point in different spatial directions, respectively. Note that for illustrative purposes Fig. 3 only depicts two individual base beampatterns. In general the number $M$ of superimposed base beampatterns and/or main lobes may be larger than or equal to two, i.e. $M \geq 2$.

According to embodiments the at least two antenna elements 460-1 to 460-$N_{elem}$, may be associated to a common radio cell. In other words, the at least two antenna elements 460-1 to 460-$N_{elem}$ may be coupled to base station serving said radio cell. The common signal 410 may be a cell-specific multi-user signal comprising signal components of a plurality of users associated to said radio cell. In particular, the signal 410 may be a digital baseband of RF WCDMA or OFDMA signal, wherein different user-specific signal components are separated by means of different spreading codes or subcarrier frequencies.

The composition or superposition of the individual, non-overlapping base beampatterns 480-1 to 480-$M$, which are all associated to the common cell-specific signal 410, may, in general, be performed in various ways. For example, there may be a mechanical superposition by vertically (and/or horizontally) arranging or aligning the at least two antenna elements 460-1 to 460-$N_{elem}$, wherein each antenna element may, according to some embodiments, be a conventional directional antenna having an individual pre-set or predefined beampattern 480-$m$ ($m = [0, 1, ..., M$-1]), preferably comprising only a single main lobe. Thereby the individual main lobes associated to the individual antenna elements 460-$n$ ($n = [0, 1, ..., N_{elem}$-1] or $n = [1, 2, ..., N_{elem}]$) may be facing or pointing in different spatial directions in a non-overlapping manner. For example, the individual non-overlapping beampatterns 480-$m$ ($m = [0, 1, ..., M$-1]) of the conventional direction-al antennas 460-$n$ ($n = [0, 1, ..., N_{elem}$-1] or $n = [1, 2, ..., N_{elem}]$) may have different downtilts, e.g. as a result of different inclination angles of the individual antennas. In other words, the means 470 for forming the composite beampattern 480 may comprise means for coupling the at least two antenna elements 460-$n$ ($n = [0, 1, ..., N_{elem}$-1] or $n = [1, 2, ..., N_{elem}]$) together to form a composite antenna, wherein each of the at least two antenna elements or directional antennas 460-$n$ ($n = [0, 1, ..., N_{elem}$-1]) has a predefined individual beampattern 480-$m$ ($m = [0, 1, ..., M$-1]).

Thereby, the at least two individual main lobes point in different spatial directions. For example, a first one of the at least two individual beampatterns 480-$m$ ($m = [0, 1, ..., M$-1] or $m = [1, 2, ..., M]$) may have a first (single) main lobe with a different downtilt angle than a second (single) main lobe of a second one of the at least two individual beampatterns 480-$m$ ($m = [0, 1, ..., M$-1]). The resulting composite beampattern 480 having the at least two different main lobes 485-$m$ ($m = [0, 1, ..., M$-1] or $m = [1, 2, ..., M]$) may advantageously be used for providing a radio cell having a certain cell-ID with the cell-specific multi-user signal 410. That is to say, the signal 410 may be cell specific and, hence, transmitted to mobile terminals associated to said cell via the at least two antenna elements 460-$n$ ($n = [1, 2,..., N_{elem}]$). Each of the at least two antenna elements 460-$n$ ($n = [1, 2,..., N_{elem}]$) may be directly or indirectly coupled to a different one of the at least two signal branches 410-1 to 410-$A$.

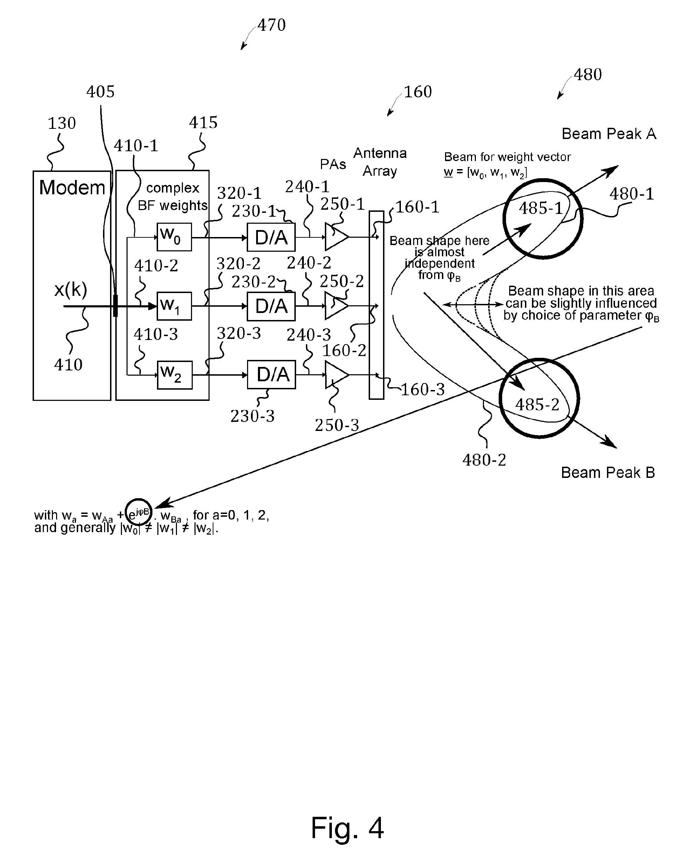

Although the composite beam- or antenna pattern 480 may in principal be generated mechanically, as has been discussed above, embodiments of the present invention also suggest generating the composite beampattern 480 by an electrical superposition of a plurality of non-overlapping base beampatterns, each having a main lobe. Such an electrical superposition of base beampatterns may, for example, be performed by digital beamforming in the digital baseband domain, which will be described now in more detail referring to Fig 4. Thereby reference numerals of elements or entities that have already been described with respect to previous Figs. will be re-used. Hence, same reference numerals denote same or similar entities.

Fig. 4 shows an embodiment of an apparatus 400 for forming a composite beampattern 480 of an antenna array 160, wherein the linear or planar antenna array 160 may generally comprise at least two closely-spaced antenna elements 160-1 to 160-$N_{elem}$. Thereby, the spacing between neighboring antenna elements is such that digital beamforming can be realized. Hence, the spacing should be chosen such that received signals of the individual antenna elements are still correlated. For example, the spacing between individual antenna elements may be ca. $\lambda/2$ or $0.8 \lambda$, wherein $\lambda$ denotes the wavelength of a communication system carrier frequency $f_c$.

The at least two antenna elements 160-$n$ ($n = [1, 2..., N_{elem}]$) of the array 160 are coupled to at least two signal branches or paths 410-1 to 410-A ($A \geq 2$) of a common cell-specific digital baseband signal 410. In general, the antenna array 160 may be coupled to the at least two signal branches 410-$a$ ($a = [0, 1, ..., A-1]$ or $a = [1, 2, ..., A]$) via a corporate feeder network, as has been explained in the introductory portion with reference to Fig. 1. The composite or superimposed beampattern 480 of the antenna array 160 comprises at least two main lobes or base beams 485-$m$ ($m = [1, 2,..., M]$) in different spatial directions, wherein each of the at least two main lobes corresponds to a main lobe specific weighting vector $\mathbf{w_m}$ ($m = [0, 1, ..., M-1]$ *or* $m = [1, 2,..., M]$) comprising at least two main lobe specific weighting coefficients $w_{a,m}$ ($a = [0, 1, ..., A-1]$, $m = [0, 1, ..., M-1]$). The number of main lobe specific weighting coefficients $w_{a,m}$ per weighting vector $\mathbf{w_m}$ corresponds to the number $A$ of signal branches or power amplifiers.

The apparatus 400 further comprises an interface 405 for the cell-specific digital baseband signal 410 which is processed in the at least two signal branches 410-$a$ ($a = [1, 2, .., A]$). The interface 405 may be a digital baseband interface such as CPRI, for example, operable to receive and/or transmit the digital baseband signal 410 for the radio cell from or to a REC, such as a modulator-demodulator (modem) device 130.

Further, the apparatus 400 comprises an antenna weight processor 415 operable to determine and/or apply, for each of the at least two signal branches 410-$a$ ($a = [1, 2, ..., A]$), a signal branch specific composite weighting coefficient $w_{a,m}$ ($a = [0, 1, ..., A-1]$, $m = [0, 1, ..., M-1]$) for respective branch of the digital baseband signal 410. The antenna weight processor 415 is operable to determine and/or apply each signal branch specific composite weighting coefficient $w_a$ ($a = [0, 1, ..., A-1]$) based on a superposition of at least two main lobe or base beam specific weighting coefficients $w_{a,m}$ ($a = [0, 1, ..., A-1]$, $m = [0, 1, ..., M-1]$), wherein each main lobe specific weighting coefficient corresponds to a different one of the at least two main lobes or base beams 485-$m$ ($m = [1, 2, ..., M]$) of the composite antenna pattern 480.

According to some embodiments of the present invention the antenna weight processor 415 may be configured to determine or select the signal branch specific composite weighting coefficients $w_a$ ($a = [0, 1, ..., A-1]$ or $a = [1, 2, ..., A]$) of the composite beamforming vector $\mathbf{w} = [w_1 \; w_2 \; ... \; w_A]^\mathrm{T}$ such that a first signal branch specific composite weighting coefficient of a first signal branch 410-$a_1$ has a different amplitude or magnitude than a second signal branch specific composite weighting coefficients of a second signal branch 410-$a_2$. In other words, the antenna weight processor 415 may superimpose the base beam or main lobe specific beamforming coefficients $w_{a,m}$ ($a = [0, 1, ..., A-1]$, $m = [0, 1, ..., M-1]$) such that a resulting branch specific composite beamforming coefficient $w_a$ ($a = [0, 1, ..., A-1]$) has a magnitude between 0 and $M$, given that the amplitude or magnitude of an individual main lobe specific weighting coefficient equals 1. This may be achieved by determining or providing each of the at least two signal branch specific composite weighting coefficients $w_a$ ($a = [0, 1, ..., A-1]$) for the digital baseband signal 410 based on a weighted sum of at least two main lobe specific weighting coefficients $w_{a,m}$ ($a = [0, 1, ..., A-1]$, $m = [0, 1, ..., M-1]$), respectively. Thereby the number of main lobe specific weighting coefficients per signal branch $a$ corresponds to the number of main lobes or individual base beams $M$. The antenna weight processor may hence be adapted to determine a signal branch specific composite weighting coefficient $w_a$ ($a = [0, 1, ..., A-1]$) of signal branch $a$ based on the following weighted sum:

$$w_a = \sum_{m=0}^{M-1} e^{j\varphi_m} w_{a,m} , \; a = [0, 1, \ldots, A\text{-}1], \tag{5}$$

wherein $A$ denotes the number of signal branches or power amplifiers associated to the at least two antenna elements, $M$ denotes the number of base beams or (desired) main lobes of the composite pattern 480, $\varphi_m \in [0, 2\pi]$ denotes a phase term corresponding to main lobe $m$, and $w_{a,m}$ denotes a real- or complex-valued main lobe specific weighting coefficient of signal branch $a$ and main lobe (base beam) $m$, with $|w_{a,m}| = 1$. For example, for the exemplary illustrated case of $M = 2$ and $A = 3$, the resulting signal branch specific composite weighting coefficient $w_a$ ($a = [0, 1, 2]$) of signal branch $a$ may have a maximum absolute value of two, i.e. $|w_a| = 2$, in case of constructive superposition of the two main lobe specific weighting coefficients $w_{a,0}$ and $w_{a,1}$, respectively. On the other hand, the absolute value of the signal branch specific composite weighting coefficient of another signal branch may be close to zero because of a more destructive superposition of the two respective main lobe specific weighting coefficients.

The idea of embodiments is to shape a composite beam 480 that has a different shape compared to conventional single main lobe beams. The composite beam 480 has at least two peaks 485-$m$ ($m = [0, 1, ..., M-1]$), thereby addressing at least two spatial regions of interest within one radio cell. This is expected to bring certain capacity improvements compared to the "conventional beam shape", which is one narrow beam with low downtilt. Particularly in capacity-limited scenarios first system level simulations indicate ca. 8% and more gain in spectral efficiency and/or cell border throughput, while being completely transparent to the modem software in the REC entity 130 and the Basestation-to-RRH interface 405. Embodiments do not require an increase in the number of CPRIs as one cell-related or cell specific signal 410 is transmitted or radiated via the composite pattern 480. That is to say, the digital baseband signal 410, which is a multi-user signal, has a useful signal bandwidth corresponding to the system bandwidth of an underlying cellular communication system, such as, for example LTE. The apparatus may be operable to apply each determined signal branch specific composite weighting coefficient $w_a$ ($a = [0, 1, ..., A\text{-}1]$) to the whole useful signal bandwidth of the digital baseband signal 410. For LTE, for example, all subcarriers comprised by the signal 410 may be beam-formed with the same composite weighting coefficients $w_a$ ($a = [0, 1, ..., A\text{-}1]$). Embodiments of the present invention are not only applicable to LTE Rel-8, but also to WCDMA systems, like UMTS.

According to the double-main-lobe example of Fig. 4, the composite beamforming vector **w** may be determined according to

$$\mathbf{w} = [w_0, w_1, w_2] = \mathbf{w}_A + \mathbf{w}_B = [w_{A0}+w_{B0}, w_{A1}+w_{B1}, w_{A2}+w_{B2}], \tag{6}$$

or more generally

$$\mathbf{w} = [w_0, w_1, w_2] = \mathbf{w}_A + e^{j\varphi B} \cdot \mathbf{w}_B, \tag{7}$$

with $\varphi_B$ being an arbitrary constant. As described before, $|w_0|$, $|w_1|$, $|w_2|$ may always turn out to be of different magnitude, which, in return, leads to the PAs 250-1, 250-2, 250-3 operating at different powers. In case of two superimposed main lobes or base beams the power difference may be up to 3 dB. As a consequence, some embodiments may require some extra PA power as a power margin relative to an average PA power. By choosing $\varphi_B$ appropriately, it is possible to mask out a PA failure virtually without impact on the beam. That is to say, if the PA's 250 are over-dimensioned appropriately, this concept is highly robust against PA failure.

If it is assumed that all involved individual complex beamforming weights $w_{a,m}$ ($a = [0, 1, ..., A\text{-}1]$, $m = [0, 1, ..., M\text{-}1]$) have the same magnitude ($|w_{a,m}| = 1$) but different phases, then, by appropriate selection of $\varphi_m$ ($m = [0, 1, ..., M\text{-}1]$) it is always possible to make one of the resulting composite weighting coefficients $w_a$ ($a = [0, 1, ..., A\text{-}1]$) equal to zero. This means, that if power amplifier 250-$a$ of a signal branch $a$ ($a = [0, 1, ..., A\text{-}1]$ or $a = [1, 2, ..., A]$) fails, it is possible to select $\varphi_m$ ($m = [0, 1, ..., M\text{-}1]$) such that the associated composite weight coefficient $w_a$ ($a = [0, 1, ..., A\text{-}1]$) becomes zero. So the failed power amplifier 250-$a$ will not be needed anyway.

The effect of selection of $\varphi_m$ ($m = [0, 1, ..., M\text{-}1]$) on the resulting overall beam shape (the shape of the "multi-beam") is considered to be negligible, as long as the at least two "base beams" (labeled A and B in Fig. 4) are spatially non-overlapping. Hence, the underlying assumption of embodiments is that full freedom can be used in the selection of $\varphi_m$ ($m = [0, 1, ..., M\text{-}1]$) to force the resulting composite weight coefficient $w_a$ ($a = [0, 1, .., A\text{-}1]$) of one power amplifier to be zero without significantly impacting the shape of the composite or superimposed "multi-beam" 480.

This means that some embodiments of the present invention allow for a redundancy concept against power amplifier failure that comes virtually without impact on the composite beam shape 480. Note that embodiments of the present invention will work the more efficiently the more antenna elements 160-$n$ and/or signal branches 410-$a$ are available. Preferably, a number $N_{elem}$ of antenna elements and/or a number A of signal branches (power amplifiers) coupled to the $N_{elem}$ antenna elements is equal to or larger than five, i.e. $A \geq 5$, with $A \leq N_{elem}$.

As long as all signal branches or the power amplifiers thereof are fully operational, some embodiments may let the phase terms $\varphi_m \in [0, 2\pi]$, $m = [0, 1, ..., M\text{-}1]$ change slowly over time, wherein "slow" means slow compared to Channel State Information (CSI) feedback cycles and scheduler delays. Hence, embodiments may rotate the phase terms $\varphi_m \in [0, 2\pi]$, $m = [0, 1, ..., M\text{-}1]$ for example in the range of 1° to 10°, in particular 5°, per time interval of e.g. 100 ms. The phase terms $\varphi_m \in [0, 2\pi]$, $m = [0, 1, ..., M\text{-}1]$ may hence be time dependent. This time dependent phase rotation allows for using each signal branch's power amplifier 250-$a$ ($a = [0, 1, ..., A\text{-}1]$) equally in the long term, thereby avoiding unequal aging of certain power amplifiers 250-$a$ ($a = [0, 1, ..., A\text{-}1]$) or uneven heat distributions on the AAA device 400. However, this requires an over-dimensioning of the PA power, for example by about 3dB in case of M = 2 main lobes. For any selection of $\varphi_m \in [0, 2\pi]$, $m = [0, 1, ..., M\text{-}1]$, the branch specific composite weight coefficient $w_a$ of signal branch $a$ ($a = [0, 1, ..., A\text{-}1]$) with the highest magnitude will be up to 3 dB higher than the average weight level if all weights had equal power. Also, note that embodiments of the present invention are not at all limited to exemplarily described two beams ("double-beam") but can be enhanced to more than two base beams or main lobes. However, typically the number of base beams would be $M = 2$ or $M = 3$. For $M = 3$ base beams instead of just $M = 2$, the PA over-dimensioning would amount to ca. 4.8 dB rather than 3 dB.

Some embodiments aim at avoiding the aforementioned unequal PA usage. For that purpose, it is one finding that the question, which PA 250-*a* (*a* = [1, 2, .., A]) is getting how much power, depends on the parameter $\varphi_m$ (*m* = [0, 1, ..., *M*-1]), i.e. whether the main lobe specific beamforming coefficients $w_{a,m}$ (*a* = [0, 1, ..., *A*-1], *m* = [0, 1, ..., M-1]) (e.g. $w_{Aa}$ and $w_{Ba}$ in the example of Fig. 4) add up constructively or destructively in the Eq. (5) or (7) for PA or signal branch "*a*". Unequal power distribution among the different PAs 250-*a* (*a* = [1, 2, ..., A]) may be reduced if $\varphi_m$ (*m* = [0, 1, ..., *M*-1]) is, for example, made a function of the frequency *f*. That is to say, the antenna weight processor 415 may be configured to determine each signal branch specific composite weighting coefficient $w_a$ (*a* = [0, 1, ..., *A*-1]) based on a frequency selective or frequency dependent superposition of the at least two main lobe specific weighting coefficients $w_{a,m}$ (*m* = [0, 1, .., *M*-1]) per branch *a* (*a* = [1, 2, ..., A]), such that the resulting composite beampattern 480 comprises at least two frequency dependent main lobes in different spatial directions. In OFDM based systems, for example, $\varphi_m$ (*m* = [0, 1, ..., *M*-1]) may be made a function of the subcarrier, thus averaging out constructive and destructive superpositions of the complex weights $w_{a,m}$ (*a* = [0, 1, ..., *A*-1], *m* = [0, 1, ..., *M*-1]) over the frequency axis. In accordance to Eq. (5) the antenna weight processor 415 may be operable to determine each of the at least two signal branch specific composite weighting coefficients $w_a$ (*a* = [0, 1, ..., *A*-1]) based on a frequency selective or frequency dependent weighted sum of the at least two main lobe specific weighting coefficients $w_{a,m}$ (*m* = [0, 1, ..., *M*-1]) per branch *a* (*a* = [0, 1, ..., *A*-1]), respectively. In particular, the antenna weight processor 415 may be operable to determine the frequency selective (frequency dependent) signal branch specific composite weighting coefficient $w_a(f)$ of antenna element *a* corresponding to

$$w_a(f) = \sum_{m=0}^{M-1} e^{j\varphi_m(f)} w_{a,m} \; , \; a = [0, 1, \ldots, A\text{-}1], \; m = [0, 1, \ldots, M\text{-}1], \tag{8}$$

wherein $\varphi_m(f) \in [0, 2\pi]$ denotes a phase term corresponding to main lobe or base beam *m* and depending on frequency *f*. In some embodiments the antenna weight processor 415 may be configured to determine or compute the frequency dependent phase term $\varphi_m(f)$ corresponding to main *lobe m* based on a relation between said frequency *f* and a useful signal/system bandwidth $f_{BW}$ of the cell-specific multi-user digital baseband signal 410. For Orthogonal Frequency Multiplex Division (OFDM) based communication systems, employing a plurality of subcarrier frequencies within the system bandwidth $f_{BW}$, the antenna weight processor 415 may, for example, determine or provide the phase term $\varphi_m(f)$ corresponding to

$$\varphi_m(f) = 2\pi * f/f_{BW} * m/(M\text{-}1) + \varphi_{\text{const},m} \; , \tag{9}$$

wherein *M* denotes the number of main lobes or base beams of the composite beam 480, *m* denotes the *m*-th main lobe, *f* denotes a subcarrier index, $f_{BW}$ denotes the useful signal bandwidth in units of subcarriers, and $\varphi_{\text{const},m}$ denotes an arbitrary constant phase term for the *m*-th main lobe. Hence, for the double-beam example of Fig. 4, the composite complex composite beamforming weights become a function of the frequency (subcarrier) according to $w_a(f) = w_{Aa} + e^{j\varphi B(f)} \cdot w_{Ba}$, for *a* = 0, 1, ..., A (A = number of PAs). The generalization for *M* beams or main lobes leads to Eq. (9).

It turns out that in this way the average power $P_a$ of a composite weight $w_a$ (*a* = [0, 1, ..., *A*-1]) averaged over all OFDM system subcarriers, i.e. the time domain power amplification, has always the same magnitude for all PAs 250-*a* (*a* = [1, 2, ..., A]), if it is assumed that the magnitudes of the base beams' complex weights $w_{a,m}$ (*m* = [0, 1, ..., *M*-1]) per branch *a* (*a* = [0, 1, ..., *A*-1] *a* = [1, 2,..., A]) all have the same magnitude (no tapering). For *M* = 2 main lobes *m* = "A" and "B" the average power may be computed according to

$$P_a = \sum_{f=f_{BW,start}}^{f_{BW,end}} \left| w_{a,A} + e^{j\varphi_B(f)} \cdot w_{a,B} \right|^2 . \tag{10}$$

For the more general case of *M* main lobes or base beams in the composite beampattern 480, Eq. (10) may be written as

$$P_a = \sum_{f=f_{BW,start}}^{f_{BW,end}} \sum_{m=0}^{M-1} \left| e^{j\varphi_m(f)} \cdot w_{a,m} \right|^2 , \tag{11}$$

wherein $f_{BW,start}$ and $f_{BW,end}$ denote the lower and upper end of the usable range of subcarriers, e.g., 600 subcarriers for a 10 MHz LTE system bandwidth with $N_{fft}$ = 1024.

The fact that each complex weight is multiplied with a "phase ramp function" $e^{j\varphi_m(f)}$ may be considered as an introduction of a cyclic delay to the signals in the signal branches 410-$a$ ($a$ = [1, 2, ..., $A$]). Due to the correspondence between "phase ramp in frequency domain" and "delay in time domain", this phase ramp $e^{j\varphi_m(f)}$ may be modeled as a delay in the respective signal path 410-$a$ ($a$ = [1, 2,..., $A$]), as will become clearer in the sequel.

Each base beam or main lobe $m$ ($m$ = [1, 2, ..., $M$]) contributes an additional delay $\Delta\tau$, with $\Delta\tau$ = $1/f_{BW}$. For example, for $M$ = 3 non overlapping base beams and a 10 MHz LTE system (useful system bandwidth $f_{BW}$=9 MHz), we get $\Delta\tau$ = 0.1111 μs, i.e. base beam $m$=0 --> delay $\tau_0$ = 0, base beam $m$=1 --> delay $\tau_1$ = $\Delta\tau$ = 0.1111 μs, and base beam $m$=2 --> delay $\tau_2$ = 2·$\Delta\tau$ = 0.2222 μs. For a LTE system 0.1 μs corresponds to an additional multipath of about 30 meters, or a phase rotation of +/- 3.6° within one Physical Resource Block (PRB), which corresponds to 12 subcarriers spanning a frequency range or bandwidth of 180 kHz. Such a slight multipath echo may slightly degrade a 64 QAM (QAM = Quadrature Amplitude Modulation) signal in Line-Of-Sight (LOS) conditions, but should be negligible in the presence of normal radio channel multi-path.

If it is accepted that the branch specific PAs 250-$a$ ($a$ = [1, 2, ..., $A$]) are used to different extends and it is not tried to avoid unequal PA usage by the method outlined before, i.e. we set $\varphi_m(f) = \varphi_m = \varphi_{const,m}$ instead of $\varphi_m(f) = 2\pi \cdot f/f_{BW} \cdot m/(M\text{-}1) + \varphi_{const,m}$, then we can always set the parameters $\varphi_{const,m}$ ($m$ = [0, 1, ..., $M$-1]) such that (at least) one of the PAs 250-$a$ ($a$ = [1, 2, ..., $A$]) gets exactly zero power. This opens up the possibility for a redundancy concept where we have no degradation upon failure of one PA. Note that this only applies to the "double-beam" or "multi-peak-beam" beam shapes, but not to the "classical beams".

The multi-peak beamforming according to embodiments of the present invention may be realized in various ways. Either, embodiments may be implemented in the frequency domain, which may be advantageous, for example, for OFDM based concepts. Or, embodiments may be implemented in the time domain, which may be advantageous, for example, for WCDMA and OFDM based concepts.

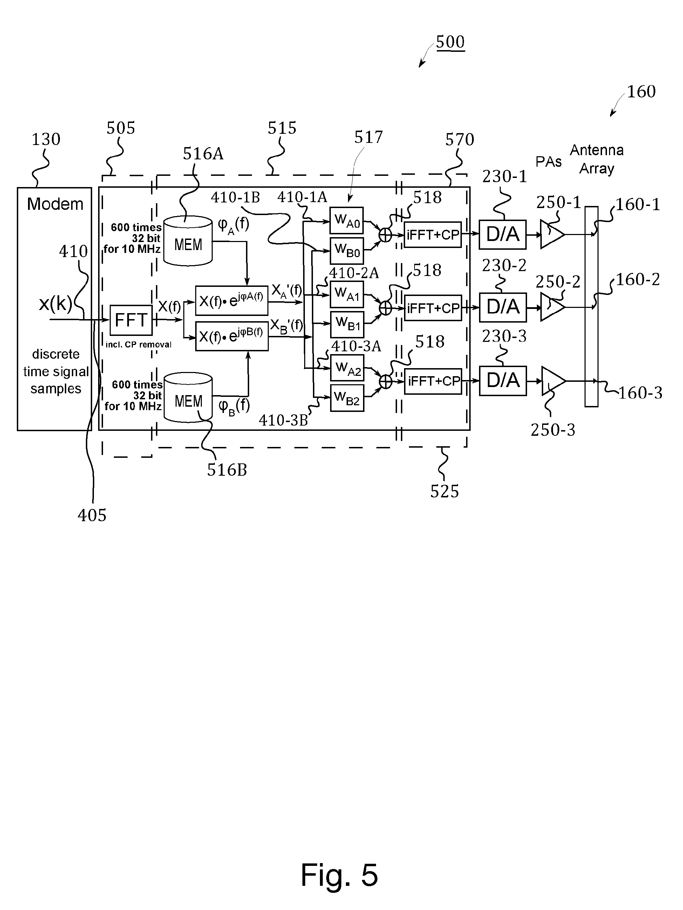

Fig. 5 exemplarily depicts a block diagram of an apparatus 500 for forming a composite beampattern 480 of an antenna array 160 in the frequency domain.

The apparatus 500 comprises means 570 for forming the composite beampattern 480 for the cell-specific multi-user digital baseband signal 410 being provided to the apparatus 500 via a CPRI interface 405 from a modem device 130. The means 570 for forming the composite beampattern 480 comprises an antenna weight processor 515 which is arranged between a Fast Fourier Transform (FFT) processor 505 and an Inverse Fast Fourier Transform (IFFT) processor 525. Hence, the antenna weight processor 515 of apparatus 500 is adapted to perform the composite beamforming in the frequency domain. For that purpose, the antenna weight processor 515 may be arranged between a Fast Fourier Transform (FFT) processor 505 and an Inverse Fast Fourier Transform (IFFT) processor 525 to determine each of the at least two signal branch specific composite weighting coefficients based on the frequency selective weighted sum of the at least two main lobe specific weighting coefficients in the frequency domain.

The FFT processor 505 receives the time-domain digital baseband signal 410 and transforms it into the frequency domain by the well-known FFT operations in order to obtain samples of a frequency domain signal $X(f)$. In the antenna weight processor 515 the frequency domain signal $X(f)$ is split into two main lobe specific signal branches A and B. In the first signal branch A the frequency domain signal $X(f)$ is weighted with a first frequency dependent phase rotation term to obtain a first phase rotated signal $X_A'(f)$, wherein $X_A'(f) = X(f)^* e^{j\varphi A(f)}$. In the second signal branch B samples of the frequency domain signal $X(f)$ are weighted with a second phase rotation term to obtain a second phase rotated signal $X_B'(f)$, wherein $X_B'(f) = X(f)^* e^{j\varphi_B(f)}$. The frequency or subcarrier specific phase values $\varphi_A(f)$ and $\varphi_B(f)$ may be stored in the respective memory regions 516A and 516B. For example, for an OFDM signal having 600 carriers for a 10 MHz bandwidth, 600 sub-carrier dependent 32-bit phase terms $\varphi_A(f)$ and $\varphi_B(f)$ may be fetched from the memory areas 516A and 516B, respectively. The phase rotated frequency domain signals $X_A'(f)$ and $X_B'(f)$ are then each split into A = 3 PA specific signal branches, respectively. The resulting signal branches 410-1A, 410-2A, 410-3A and 410-1B, 410-2B, 410-3B are then weighted by base beam or main lobe specific weighting vectors $\mathbf{w}_A$ and $\mathbf{w}_B$, respectively (see reference numeral 517). Thereby the respective main lobe specific weight coefficients $w_{A0}$, $w_{A1}$, $w_{A2}$ and $w_{B0}$, $w_{B1}$, $w_{B2}$ may be predetermined, i.e. fixed. After applying main lobe specific beamforming weights $w_{A0}$, $w_{A1}$, $w_{A2}$ and $w_{B0}$, $w_{B1}$, $w_{B2}$ and a subsequent signal superposition by digital adders 518, the resulting signal branch specific weighted signal components of signal 410 are fed to an IFFT block 525, wherein the branch specific signals are transformed back to time domain. The resulting time domain signals of the three signal branches are then D/A converted by DACs 230-$a$ ($a$ = 1, 2, 3) and amplified by power amplifiers 250-$a$ ($a$ = 1, 2, 3) before being radiated by the antenna array 160.

In the embodiment of Fig. 5, the AAA 500 needs to be aware of the exact OFDM symbol boundaries to be able to convert each symbol of signal 410 to frequency domain and to apply the necessary processing. This is tricky especially in case of Multimedia Broadcast Multicast Service (MBMS), when different Cyclic Prefix (CP) lengths are used in downlink. Unless AAA 500 auto-detects the symbol boundaries (which could be possible, too) some signaling from modem 130 to AAA 500 may be needed to inform about the symbol boundaries. Hence, the antenna weight processor 515 may be operable to detect OFDM symbol boundaries of data symbols of the data stream 410 input to the antenna weight processor 515 to apply a composite weighting coefficient $w_a$ of signal branch $a$ ($a$ = [1, 2, .., A]) for each of the at least two signal branches to the data stream on an OFDM symbol basis.

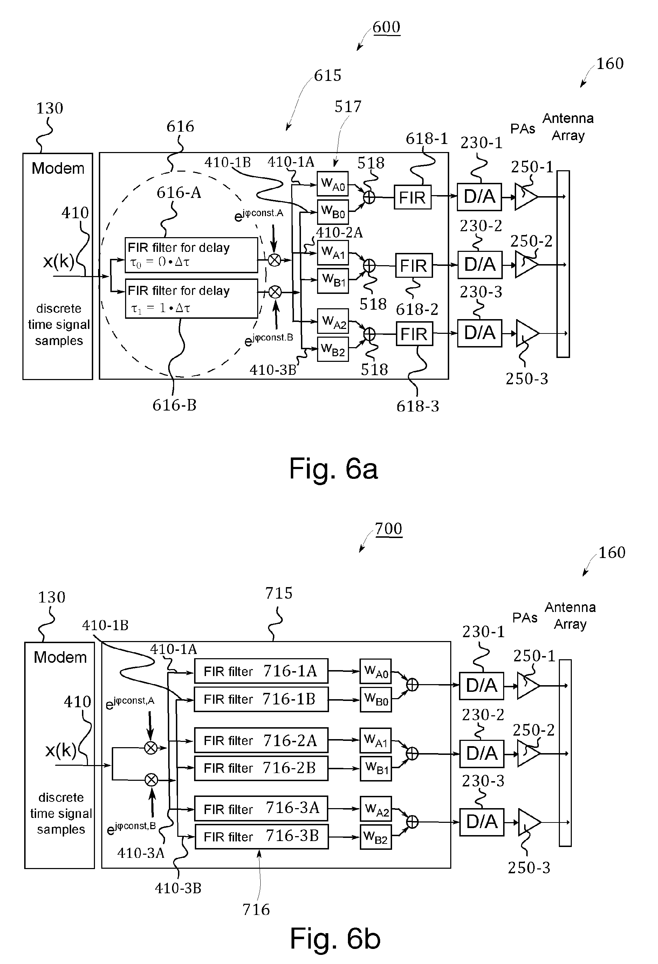

Fig. 6a, b both refer to embodiments, where the frequency dependent composite beamforming is done in the time domain. In both exemplary implementations the antenna weight processor comprises, for each of the at least two base beams or main lobes, at least one Finite Impluse Response (FIR) filter structure, to determine the frequency selective superposition of the at least two main lobe specific weighting coefficients in the time-domain.

Fig. 6a shows an embodiment of the present invention, wherein the beamforming processor 615 comprises at least one FIR filter or tap delay line for realizing the frequency selective phase rotation of the phase term. As can be seen in Fig. 6a, the time domain cell-specific digital baseband signal $x(k)$ 410 may be split to be fed into a FIR structure 616 comprising $M$ main lobe specific tapped delay elements for realizing the $M$ frequency dependent delays $\tau_m$ ($m$ = [0, 1, ..., $M$-1]) corresponding to the phase ramp function $e^{j\varphi_m(f)}$. In the example of Fig. 6a, i.e. $M$ = 2, there are two delay elements 616A and 616B, wherein the delay element 616A may even be omitted for the case that $\tau_0$ = 0, which is possible without loss of generality. The delay element 616B of the FIR filter structure 616 corresponds to a delay $\Delta\tau$ = 1/$f_{BW}$, wherein $f_{BW}$ denotes a useful signal bandwidth of the digital baseband signal 410. For both delay elements 616A, 616B the delayed signals are multiplied with a constant rotation phase term $e^{j\varphi A}$ and $e^{j\varphi B}$ respectively, before the $M$ = 2 delayed signals are branched into $A$ = 3 PA specific signal branches, respectively. The resulting signal branches 410-1A, 410-2A, 410-3A and 410-1B, 410-2B, 410-3B are then weighted by base beam or main lobe specific weighting vectors $\mathbf{w}_A$ and $\mathbf{w}_B$, respectively (see reference numeral 517). Thereby the respective main lobe specific weight coefficients $w_{A0}$, $w_{A1}$, $w_{A2}$ and $w_{B0}$, $w_{B1}$, $w_{B2}$ may be predetermined, i.e. fixed. After applying main lobe specific beamforming weights $w_{A0}$, $w_{A1}$, $w_{A2}$ and $w_{B0}$, $w_{B1}$, $w_{B2}$ and a subsequent signal superposition by digital adders 518, the resulting signal branch specific weighted signal components of signal 410 are fed to branch specific FIR filters 618-$a$ ($a$ = 1, 2, 3), which serve for calibrating the signal path to the antenna elements 160-$a$ ($a$ = 1, 2, 3). The FIR filtered signals of the three signal branches are then D/A converted by DACs 230-$a$ ($a$ = 1, 2, 3) and amplified by power amplifiers 250-$a$ ($a$ = 1, 2, 3) before being radiated by the antenna array 160.

In this approach, actual delays are added to the branches of the time signal 410. Therefore, OFDM symbol timings do not need to be known by the AAA 600. This makes this scheme compatible also with WCDMA and does not require any signaling between modem 130 and AAA 600. Since the delays $\Delta\tau_m$ are very small (<< 1 μs, while CP length $\geq \approx$ 4.7μs), they do not harm system performance. Delays $\Delta\tau_m$ are not full integers of sample, therefore sub-sample delays need to be realized by the FIR filter structure 616.

Fig. 6b shows a further embodiment of the present invention. Here, the cell-specific digital baseband signal 410 being input to the beamforming processor 715 of the apparatus 700 is first split up into two base beams or main lobe specific signal branches in which the respective signal copies are each multiplied by a constant phase rotation term $e^{j\varphi A}$ and $e^{j\varphi B}$ respectively. Downstream to the constant phase rotation the two main lobe specific signal branches A and B are each split up again into $A$ = 3 PA specific signal branches, respectively. The resulting signal branches 410-1A, 410-2A, 410-3A and 410-1B, 410-2B, 410-3B are then passed through respective FIR filters 716-1A, 716-2A, 716-3A and 716-1B, 716-2B, 716-3B for realizing the frequency or subcarrier dependent phase rotation in the time domain plus signal branch calibration. After passing the respective FIR filters the FIR-filtered signals are then weighted with main lobe and signal branch specif ic beamforming weights $w_{A0}$, $w_{A1}$, $w_{A2}$ and $w_{B0}$, $w_{B1}$, $w_{B2}$ before being superimposed at adders 718. The resulting superimposed composite signals of the three signal branches are then D/A converted by DACs 230-$a$ ($a$ = 1, 2, 3) and amplified by power amplifiers 250-$a$ ($a$ = 1, 2, 3) before being radiated by the antenna array 160.

In the latter implementation variant, FIR filters are partitioned differently compared to the Fig. 6a. FIR filters for calibration and for beam forming are merged to one FIR filter 716-1A, 716-1B or 716-2A, 716-2B or 716-3A, 716-3B, respectively. That is to say, the at least one FIR filter structure associated to one of the at least two signal branches may be operable, besides determining the frequency selective weighted sum of the at least two main lobe specific weighting coefficients for said antenna element, to calibrate an antenna element associated to the one of the at least two signal branches.

While the frequency domain implementation of Fig. 5 has a closer link to the original idea and the derivation of this solution, the time domain implementation may be preferable because it is suitable for both LTE and WCDMA and no signaling is needed between modem and AAA. Sub-sample delay FIR filters are already used inside AAAs for array calibration purposes, however, embodiments may require more such FIR filters. Today, $N_{PA}$-1 FIR filters are needed to implement sub-sample delays in TX for calibration. Only real FIR coefficients are used for this. With the embodiments, the total number of required FIR filters (here only DL is considered - same for UL) depends on the implementation variant. The total number becomes

- ($N_{PA}$-1)+($M$-1), if the delays for this beam forming scheme and for calibration are realized in separate filters ($M$=nb. of base beams considered), as outlined in Fig. 6a. Still all FIR filter coefficients are real.

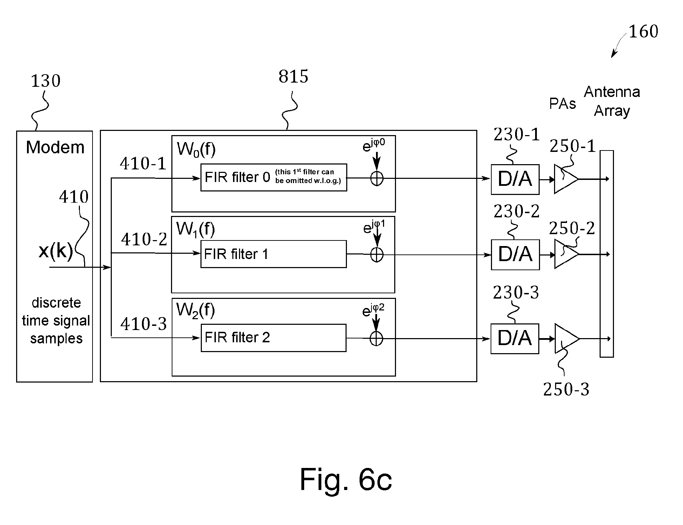

- $N_{PA} \cdot M{-}1$, if these delays are realized together in the same filter. Still all FIR filter coefficients are real. This is illustrated in Fig. 6b.
- $N_{PA}{-}1$ (but now with complex coefficients), if the architecture is kept unchanged compared to today's FIR filters for calibration, just that these FIR filters now have complex (rather than real) coefficients. Compare Fig. 6c which shows a similar implementation to Fig 6b, however with complex valued FIR filter coefficients.

The first variant is the most straight forward variant following the direct derivation of this method. The second variant potentially yields better Error Vector Magnitude (EVM) because the signal is not passing through successive filter stages, but the other variants are probably also fully sufficient in terms of EVM requirements. The third variant is attractive because it uses the simple hardware architecture.

To summarize, embodiments propose to overlay different base beams to get an overall "multi-peak" beam pattern, whereas each such base beam was weighted with its own constant complex phase and attributed its own delay (or cyclic delay). This concept, which is applicable already to WCDMA and LTE Rel-8, may be used for two purposes. Either it enables the possibility to deliver the same power to all PAs of the AAA for "multi-peak-beams" (traditionally this would imply unequal average powers for different PAs). Or, when accepting unequal powers for different PAs, it allows choosing which PA gets zero power, thereby realizing a robust redundancy concept for "multi-peak" kind of beam shapes.

One advantage of embodiments is that a corresponding AAA product may be provided that may generate benefits in terms of cell capacity and coverage with no or minimum changes of existing eNodeB Modem/L2 software and without increasing the number of CPRIs, while still being able to exploit the spatial (e.g. vertical) domain.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant). For example, the means for forming the composite beam pattern may comprise digital and/or analog electrical beamforming circuitry.

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. An apparatus (400; 500; 600; 700) for providing a composite beampattern (480) for at least two antenna elements (160-*n*; *460-n*) forming an antenna array (160) coupled to at least two signal branches (410-*a*) of a signal (410), the composite beampattern (480) having at least two main lobes (485-*m*) pointing in different spatial directions, the apparatus comprising:

means (470) for forming the composite beampattern (480) for the signal (410) by superimposing at least two individual beampatterns (480-*m*) provided by the at least two antenna elements (160-*n*; 460-*n*), wherein each of at least two individual beampatterns (480-*m*) has a main lobe (485-*m*), wherein the at least two main lobes (485-*m*) of the at least two individual beampatterns (480-*m*) point in different spatial directions, respectively, and **characterized in that**

the means (470) for forming the composite beampattern (480) comprises an antenna weight processor (415; 515; 615; 715) operable to determine, for each of the at least two signal branches (410-*a*), a signal branch specific composite weighting coefficient ($w_a$) for the signal (410),

wherein the antenna weight processor (415; 515; 615; 715) is operable to determine the signal branch specific composite weighting coefficient ($w_a$) corresponding to a superposition of at least two complex valued main lobe specific weighting coefficients ($w_{a,m}$),

wherein the antenna weight processor (415; 515; 615; 715) is operable to rotate a phase of a main lobe specific weighting coefficient ($w_{a,m}$) by an additional main lobe specific phase rotation quantity ($e^{j\varphi m}$), wherein each main lobe specific weighting coefficient ($w_{a,m}$) corresponds to a different one of the at least two single main lobes (485-*m*),

wherein the antenna array (160) is coupled to at least three signal branches (410-*a*) of the signal (410), and wherein the antenna weight processor (415; 515; 615; 715) is operable to determine at least one additional phase rotation quantity ($e^{j\varphi_m}$) corresponding to main lobe *m*, such that the signal branch specific composite weighting coefficient $w_a$ of signal branch *a* becomes essentially zero in case signal branch *a* has a malfunction.

2. The apparatus (400; 500; 600; 700) according to claim 1, wherein the antenna weight processor (415; 515; 615; 715) is operable to determine a signal branch specific composite weighting coefficient $w_a$ of signal branch *a* corresponding to

$$w_a = \sum_{m=0}^{M-1} e^{j\varphi_m} w_{a,m} , a = [0, 1, \ldots, A\text{-}1],$$

wherein *A* denotes the number of signal branches associated to the at least two antenna elements, *M* denotes the number of main lobes, $\varphi_m \in [0, 2\pi]$ denotes a phase term corresponding to main lobe *m,* and $w_{a,m}$ denotes the complex-valued main lobe specific weighting coefficient of signal branch *a* and main lobe *m*.

3. The apparatus (400; 500; 600; 700) according to claim 1, wherein a first one of the at least two individual beampatterns (480-*m*) has a first main lobe (485-*m*) with a different downtilt than a second main lobe (485-*m*) of a second one of the at least two individual beampatterns (480-*m*).

4. The apparatus (400; 500; 600; 700) according to claim 1, wherein the antenna weight processor (415; 515; 615; 715) is operable to determine the signal branch specific composite weighting coefficients ($w_a$) such that a first signal branch specific composite weighting coefficient of a first signal branch has a different amplitude than a second signal branch specific composite weighting coefficient of a second signal branch.

5. The apparatus (400; 500; 600; 700) according to claim 1, wherein the antenna weight processor (415; 515; 615; 715) is operable to determine a time dependent signal branch specific composite weighting coefficient $w_a$ of signal branch *a* corresponding to

$$w_a(t) = \sum_{m=0}^{M-1} e^{j\varphi_m(t)} w_{a,m} , a = [0, 1, \ldots, A\text{-}1],$$

wherein *A* denotes the number of signal branches associated to the at least two antenna elements, *M* denotes the number of main lobes, $\varphi_m(t) \in [0, 2\pi]$ denotes a time dependent phase term corresponding to main lobe *m,* and $w_{a,m}$

denotes a complex-valued main lobe specific weighting coefficient of signal branch *a* and main lobe *m.*

6. The apparatus (400; 500; 600; 700) according to claim 5, wherein antenna weight processor (415; 515; 615; 715) is operable to change the time dependent phase term $\varphi_m(t)$ corresponding to main lobe *m* over time, respectively, such that equal power usage is obtained among the signal branches in average.

7. The apparatus (400; 500; 600; 700) according to claim 1, wherein the antenna weight processor (415; 515; 615; 715) is operable to determine each signal branch specific composite weighting coefficient ($w_a$) based on a frequency selective superposition of the at least two main lobe specific weighting coefficients ($w_{a,m}$), such that the resulting composite beampattern (480) is frequency dependent.

8. The apparatus (400; 500; 600; 700) according to claim 7, wherein the antenna weight processor (415; 515; 615; 715) is operable to determine a frequency selective signal branch specific composite weighting coefficient $w_a(f)$ of signal branch *a* corresponding to

$$w_a(f) = \sum_{m=0}^{M-1} e^{j\varphi_m(f)} w_{a,m} \ , a = [0, 1, \dots, A\text{-}1],$$

wherein *A* denotes the number of signal branches associated to the at least two antenna elements, *M* denotes the number of main lobes, $\varphi_m(f) \in [0, 2\pi]$ denotes a phase term corresponding to main lobe *m* and depending on frequency *f*, and $w_{a,m}$, denotes a frequency-independent complex-valued main lobe specific weighting coefficient of signal branch *a* and main lobe *m.*

9. The apparatus (400; 500; 600; 700) according to claim 8, wherein the antenna weight processor (415; 515; 615; 715) is operable to determine the phase term $\varphi_m(f)$ corresponding to main lobe *m* and depending on frequency *f* based on a relation between the frequency *f* and a useful signal bandwidth of the digital baseband signal and based on a relation between main lobe *m* and a total number of main lobes (485-*m*).

10. The apparatus (400; 500; 600; 700) according to claim 8, wherein the antenna weight processor (415; 515; 615; 715) is operable to determine the phase term $\varphi_m(f)$ corresponding to main lobe *m* and depending on frequency *f,* respectively, such that equal power usage is obtained among the signal branches in average.

11. The apparatus (400; 500; 600; 700) according to claim 7, wherein the antenna weight processor (415; 515; 615; 715) comprises, for each of the at least two signal branch specific composite weighting coefficients ($w_a$), at least one Finite Impulse Response (FIR) filter structure (616; 716), to determine the frequency selective superposition of the at least two main lobe specific weighting coefficients ($w_a$) in the time-domain.

12. The apparatus (400; 500; 600; 700) according to claim 7, wherein the antenna weight processor is arranged between a Fast Fourier Transform (FFT) processor (505) and an Inverse Fast Fourier Transform (IFFT) processor (525) to determine each of the at least two signal branch specific composite weighting coefficients ($w_a$) based on the frequency selective weighted sum of the at least two main lobe specific weighting coefficients ($w_{a,m}$) in the frequency domain.

13. A method for providing a composite beampattern (480) for at least two antenna elements (160-*n*; 460-n) forming an antenna array (160) coupled to at least two signal branches (410-*a*) of a signal (410), the composite beampattern (480) having at least two main lobes (485-*m*) pointing in different spatial directions, the method comprising:

   forming the composite beampattern (480) for the signal 8410) by superimposing at least two individual beampatterns (480-*m*) provided by the at least two antenna elements (160-*n*; 460-*n*), wherein each of at least two individual beampatterns (480-m) has a main lobe (485-*m*), wherein the at least two main lobes (485-*m*) of the at least two individual beampatterns (480-*m*) point in different spatial directions, respectively,
   and **characterized in that**
   forming the composite beampattern (480) comprises determining, for each of the at least two signal branches (410-*a*), a signal branch specific composite weighting coefficient ($w_a$) for the signal (410), wherein each signal branch specific composite weighting coefficient ($w_a$) is determined corresponding to a superposition of at least two complex valued main lobe specific weighting coefficients ($w_{a,m}$),

wherein a phase of a main lobe specific weighting coefficient ($w_{a,m}$) is rotated by an additional main lobe specific phase rotation quantity ($e^{j\varphi_m}$), wherein each main lobe specific weighting coefficient ($w_{a,m}$) corresponds to a different one of the at least two single main lobes (485-$m$),

wherein the antenna array (160) is coupled to at least three signal branches (410-$a$) of the signal (410), and wherein determining a signal branch specific composite weighting coefficient ($w_a$) comprises determining at least one additional phase rotation quantity ($e^{j\varphi m}$) corresponding to main lobe $m$, such that the signal branch specific composite weighting coefficient $w_a$ of signal branch $a$ becomes essentially zero in case signal branch $a$ has a malfunction.

14. A computer program having a program code for performing the method of claim 13, when the computer program is executed on a computer or processor.

**Patentansprüche**

1. Vorrichtung (400; 500; 600; 700) für das Bereitstellen eines Verbund-Strahlungsdiagramms (480) für mindestens zwei eine Antennenreihe (160) bildende Antennenelemente (160-$n$; 460-$n$), gekoppelt an mindestens zwei Signalverzweigungen (410-$a$) eines Signals (410), wobei das Verbund-Strahlungsdiagramm (480) mindestens zwei Hauptkeulen (485-m) hat, die in verschiedene räumliche Richtungen gerichtet sind, umfassend:

   Mittel (470) für das Bilden des Verbund-Strahlungsdiagramms (480) für das Signal (410) durch das Überlagern mindestens zweier individueller Strahlungsdiagramme (480-$m$), die bereitgestellt werden von den mindesten zwei Antennenelementen (160-$n$; 460-$n$), wobei jedes der mindestens zwei individuellen Strahlungsdiagramme (480-$m$) eine Hauptkeule (485-$m$) umfasst, wobei die mindestens zwei Hauptkeulen (485-$m$) der mindestens zwei individuellen Strahlungsdiagramme (480-$m$) jeweils in verschiedene räumliche Richtungen ausgerichtet sind, und **dadurch gekennzeichnet, dass**
   die Mittel (470) für das Bilden des Verbund-Strahlungsdiagramms (480) einen Antennengewichtungsprozessor (415; 515; 615; 715) umfassen, der dafür ausgelegt ist, für jede der mindestens zwei Signalverzweigungen (410-a) einen signalverzweigungsspezifischen Verbund-Gewichtungskoeffizienten ($w_a$) für das Signal (410) zu bestimmen,
   wobei der Antennengewichtungsprozessor (415; 515; 615; 715) ausgelegt ist für das Bestimmen des signalverzweigungsspezifischen Verbund-Gewichtungskoeffizienten ($w_a$), der einer Überlagerung mindestens zweier komplexwertiger hauptkeulenspezifischer Gewichtungskoeffizienten ($w_{a,m}$) entspricht,
   wobei der Antennengewichtungsprozessor (415; 515; 615; 715) ausgelegt ist für das Verdrehen einer Phase des hauptkeulenspezifischen Gewichtungskoeffizienten ($w_{a,m}$) durch eine zusätzliche, hauptkeulenspezifische Phasen-Rotationsquantität ($e^{j\phi m}$), wobei jeder hauptkeulenspezifische Gewichtungskoeffizient ($w_{a,m}$) einer unterschiedlichen der mindestens zwei einzelnen Hauptkeulen (485-$m$) entspricht,
   wobei die Antennenreihe (160) gekoppelt ist an mindestens drei Signalverzweigungen (410-$a$) des Signals (410), und wobei der Antennengewichtungsprozessor (415; 515; 615; 715) ausgelegt ist für das Bestimmen mindestens einer zusätzlichen Phasen-Rotationsquantität ($e^{j\phi m}$), die der Hauptkeule $m$ entspricht, dergestalt, dass der signalverzweigungsspezifische Verbund-Gewichtungskoeffizient $w_a$ für Signalverzweigung $a$ im Wesentlichen den Wert Null annimmt, falls die Signalverzweigung eine Fehlfunktion aufweist.

2. Die Vorrichtung (400; 500; 600; 700) nach Anspruch 1, wobei der Antennengewichtungsprozessor (415; 515; 615; 715) ausgelegt ist für das Bestimmen eines signalverzweigungsspezifischen Verbund-Gewichtungskoeffizienten $w_a$ für Signalverzweigung $a$, der folgender Formel entspricht:

$$w_a = \sum_{m=0}^{M-1} e^{j\varphi_m} w_{a,m} \, , \, a = [0, 1, \ldots, A\text{-}1],$$

wobei $A$ für die Anzahl der Signalverzweigungen steht, die den mindestens zwei Antennenelementen zugeordnet sind, $M$ für die Anzahl der Hauptkeulen, $\phi_m \in [0, 2\,\text{n}]$ für eine Hauptkeule $m$ entsprechende Phasendauer und $w_{a,m}$ für den komplexwertigen, hauptkeulenspezifischen Gewichtungskoeffizienten für Signalverzweigung a und Hauptkeule $m$.

3. Die Vorrichtung (400; 500; 600; 700) nach Anspruch 1, wobei ein erstes von mindestens zwei individuellen Strahlungsdiagrammen (480-*m*) eine erste Hauptkeule (485-m) mit einem Abwärtsneigungswinkel hat, der sich unterscheidet vom Abwärtsneigungswinkel einer zweiten Hauptkeule (485-m) eines zweiten der mindestens zwei individuellen Strahlungsdiagramme (480-*m*).

4. Die Vorrichtung (400; 500; 600; 700) nach Anspruch 1, wobei der Antennengewichtungsprozessor (415; 515; 615; 715) ausgelegt ist für das Bestimmen des signalverzweigungsspezifischen Verbund-Gewichtungskoeffizienten ($w_a$), dergestalt, dass ein erster signalverzweigungsspezifischer Verbund-Gewichtungskoeffizient einer ersten Signalverzweigung eine Amplitude hat, die sich von der Amplitude eines zweiten signalverzweigungsspezifischen Verbund-Gewichtungskoeffizienten einer zweiten Signalverzweigung unterscheidet.

5. Die Vorrichtung (400; 500; 600; 700) nach Anspruch 1, wobei der Antennengewichtungsprozessor (415; 515; 615; 715) ausgelegt ist für das Bestimmen eines zeitabhängigen signalverzweigungsspezifischen Verbund-Gewichtungskoeffizienten ($w_a$) für Signalverzweigung *a*, der folgender Formel entspricht:

$$w_a(t) = \sum_{m=0}^{M-1} e^{j\varphi_m(t)} w_{a,m} \, , a = [0, 1, \dots, A\text{-}1],$$

wobei *A* für die Anzahl der Signalverzweigungen steht, die den mindestens zwei Antennenelementen zugeordnet sind, *M* für die Anzahl der Hauptkeulen, $\phi_m(t) \in [0,27 \, n]$ für eine Hauptkeule *m* entsprechende, zeitabhängige Phasendauer und $w_{a,m}$ für einen komplexwertigen hauptkeulenspezifischen Gewichtungskoeffizienten für Signalverzweigung *a* und Hauptkeule m.

6. Die Vorrichtung (400; 500; 600; 700) nach Anspruch 5, wobei der Antennengewichtungsprozessor (415; 515; 615; 715) ausgelegt ist für das Verändern der zeitabhängigen Phasendauer $\phi_m(t)$, die im Zeitablauf Hauptkeule m entspricht, dergestalt, dass ein im Durchschnitt gleicher Leistungsverbrauch der einzelnen Signalverzweigungen erreicht wird.

7. Die Vorrichtung (400; 500; 600; 700) nach Anspruch 1, wobei der Antennengewichtungsprozessor (415; 515; 615; 715) ausgelegt ist für das Bestimmen eines jeden signalverzweigungsspezifischen Verbund-Gewichtungskoeffizienten ($w_a$) auf der Grundlage einer frequenzselektiven Überlagerung der mindestens zwei hauptkeulenspezifischen Gewichtungskoeffizienten ($w_{a,m}$), dergestalt, dass das resultierende Verbund-Strahlungsdiagramm (480) frequenzabhängig ist.

8. Die Vorrichtung (400; 500; 600; 700) nach Anspruch 7, wobei der Antennengewichtungsprozessor (415; 515; 615; 715) ausgelegt ist für das Bestimmen eines frequenzselektiven signalverzweigungsspezifischen Verbund-Gewichtungskoeffizienten $w_a(f)$ für Signalverzweigung a, der folgender Formel entspricht:

$$w_a(f) = \sum_{m=0}^{M-1} e^{j\varphi_m(f)} w_{a,m} \, , a = [0, 1, \dots, A\text{-}1],$$

wobei A für die Anzahl der Signalverzweigungen steht, die den mindestens zwei Antennenelementen zugeordnet sind, *M* für die Anzahl der Hauptkeulen, $\phi_m(f) \in [0,27 \, n]$ für eine Hauptkeule *m* entsprechende und von Frequenz *f* abhängige Phasendauer und $w_{a,m}$ für einen frequenzunabhängigen, komplexwertigen hauptkeulenspezifischen Gewichtungskoeffizienten für Signalverzweigung *a* und Hauptkeule m.

9. Die Vorrichtung (400; 500; 600; 700) nach Anspruch 8, wobei der Antennengewichtungsprozessor (415; 515; 615; 715) ausgelegt ist für das Bestimmen der Phasendauer $\phi_m(f)$, die Hauptkeule *m* entspricht und von Frequenz *f* anhängt, wobei das Bestimmen auf der Grundlage der Beziehung zwischen Frequenz *f* und einer brauchbaren Signal-Bandbreite des digitalen Basisbandsignals sowie auf der Grundlage einer Beziehung zwischen Hauptkeule m und einer Gesamtzahl von Hauptkeulen (485-*m*) erfolgt.

**10.** Die Vorrichtung (400; 500; 600; 700) nach Anspruch 8, wobei der Antennengewichtungsprozessor (415; 515; 615; 715) ausgelegt ist für das Bestimmen der Phasendauer $\phi_m(f)$, die der Hauptkeule m entspricht und die von Frequenz *f* abhängt, dergestalt, dass ein im Durchschnitt gleicher Leistungsverbrauch der einzelnen Signalverzweigungen erreicht wird.

**11.** Die Vorrichtung (400; 500; 600; 700) nach Anspruch 7, wobei der Antennengewichtungsprozessor (415; 515; 615; 715) für jeden der mindestens zwei signalverzweigungsspezifischen Verbund-Gewichtungskoeffizienten ($w_a$) mindestens eine Filterstruktur mit endlicher Impulsantwort (FIR, 616; 716) umfasst, um die frequenzselektive Überlagerung mindestens zweier hauptkeulenspezifischer Gewichtungskoeffizienten ($w_a$) im Zeitbereich.

**12.** Die Vorrichtung (400; 500; 600; 700) nach Anspruch 7, wobei der Antennengewichtungsprozessor eingerichtet ist zwischen einem Fast-Fourier-Transformationsprozessor (FFT, 505) und einem Inversen Fast-Fourier-Transformationsprozessor (IFFT, 525) zum Bestimmen eines jeden der mindestens zwei signalverzweigungsspezifische Verbund-Gewichtungskoeffizienten ($w_a$) auf der Grundlage der frequenzselektiven, gewichteten Summe der mindestens zwei hauptkeulenspezifischen Gewichtungskoeffizienten ($w_{a,m}$) in der Frequenzdomäne.

**13.** Verfahren für das Bereitstellen eines Verbund-Strahlungsdiagramms (480) für mindestens zwei eine Antennenreihe (160) bildende Antennenelemente (160-n; 460-n), gekoppelt an mindestens zwei Signalverzweigungen (410-a) eines Signals (410), wobei das Verbund-Strahlungsdiagramm (480) mindestens zwei Hauptkeulen (485-m) hat, die in verschiedene räumliche Richtungen gerichtet sind, wobei das Verfahren umfasst:

das Bilden des Verbund-Strahlungsdiagramms (480) für das Signal (410) durch das Überlagern mindestens zweier individueller Strahlungsdiagramme (480-m), die bereitgestellt werden von den mindesten zwei Antennenelementen (160-n; 460-n), wobei jedes der mindestens zwei individuellen Strahlungsdiagramme (480-m) eine Hauptkeule (485-m) umfasst, wobei die mindestens zwei Hauptkeulen (485-m) der mindestens zwei individuellen Strahlungsdiagramme (480-m) jeweils in verschiedene räumliche Richtungen ausgerichtet sind, und **dadurch gekennzeichnet, dass**
das Bilden des Verbund-Strahlungsdiagramms (480) umfasst, für jede der mindestens zwei Signalverzweigungen (410-a) einen signalverzweigungsspezifischen Verbund-Gewichtungskoeffizienten ($w_a$) für das Signal (410) zu bestimmen,
wobei jeder signalverzweigungsspezifische Verbund-Gewichtungskoeffizient ($w_a$) entsprechend einer Überlagerung mindestens zweier komplexwertiger hauptkeulenspezifischer Gewichtungskoeffizienten ($w_{a,m}$) bestimmt wird,
wobei eine Phase des hauptkeulenspezifischen Gewichtungskoeffizienten ($w_{a,m}$) durch eine zusätzliche, hauptkeulenspezifische Phasen-Rotationsquantität ($e^{j\phi m}$) verdreht wird, wobei jeder hauptkeulenspezifische Gewichtungskoeffizient ($w_{a,m}$) einer unterschiedlichen der mindestens zwei einzelnen Hauptkeulen (485-m) entspricht, wobei die Antennenreihe (160) gekoppelt ist an mindestens drei Signalverzweigungen (410-a) des Signals (410), und wobei das Bestimmen eines signalverzweigungsspezifischen Verbund-Gewichtungskoeffizienten ($w_a$) das Bestimmen mindestens einer zusätzlichen Phasen-Rotationsquantität ($e^{j\phi m}$), umfasst, die der Hauptkeule m entspricht, dergestalt, dass der signalverzweigungsspezifische Verbund-Gewichtungskoeffizient $w_a$ für Signalverzweigung a im Wesentlichen den Wert Null annimmt, falls die Signalverzweigung eine Fehlfunktion aufweist.

**14.** Ein Computerprogramm mit einem Programmcode zur Umsetzung des Verfahrens aus Anspruch 13, wenn das Computerprogramm auf einem Computer oder mit einem Prozessor ausgeführt wird.

**Revendications**

**1.** Appareil (400 ; 500 ; 600 ; 700) pour fournir un diagramme de faisceau composite (480) pour au moins deux éléments d'antenne (160-n; 460-n) formant un réseau d'antennes (160) couplé à au moins deux branches de signal (410-a) d'un signal (410), le diagramme de faisceau composite (480) ayant au moins deux lobes principaux (485-m) pointant dans des directions spatiales différentes, l'appareil comprenant :

des moyens (470) pour former le diagramme de faisceau composite (480) pour le signal (410) en superposant au moins deux diagrammes de faisceau individuels (480-m) fournis par les au moins deux éléments d'antenne (160-n ; 460-n), dans lequel chacun des au moins deux diagrammes de faisceau individuels (480-m) présente un lobe principal (485-m), dans lequel les au moins deux lobes principaux (485-m) des au moins deux diagrammes de faisceau individuels (480-*m*) pointent dans des directions spatiales différentes, respectivement, et **caractérisé en ce que**

les moyens (470) pour former le diagramme de faisceau composite (480) comprennent un processeur de poids d'antenne (415 ; 515 ; 615 ; 715) permettant de déterminer, pour chacune des au moins deux branches de signal (410-*a*), un coefficient de pondération composite spécifique de la branche de signal ($w_a$) pour le signal (410),

dans lequel le processeur de poids d'antenne (415; 515; 615; 715) permet de déterminer le coefficient de pondération composite spécifique de la branche de signal ($w_a$) correspondant à une superposition d'au moins deux coefficients de pondération spécifiques du lobe principal à valeurs complexes ($w_{a,m}$),

dans lequel le processeur de poids d'antenne (415; 515; 615; 715) permet la rotation d'une phase d'un coefficient de pondération spécifique du lobe principal ($w_{a,m}$) selon une quantité de rotation de phase spécifique du lobe principal supplémentaire ($e^{j\varphi m}$), dans lequel chaque coefficient de pondération spécifique du lobe principal ($w_{a,m}$) correspond à un lobe différent des au moins deux lobes principaux uniques (485-*m*),

dans lequel le réseau d'antennes (160) est couplé à au moins trois branches de signal (410-*a*) du signal (410), et dans lequel le processeur de poids d'antenne (415 ; 515 ; 615 ; 715) permet de déterminer au moins une quantité de rotation de phase supplémentaire ($e^{j\varphi m}$) correspondant au lobe principal m, de sorte que le coefficient de pondération composite spécifique de la branche de signal $w_a$ de la branche de signal *a* devienne sensiblement nul au cas où la branche de signal *a* connaîtrait un dysfonctionnement.

2. Appareil (400 ; 500 ; 600 ; 700) selon la revendication 1, dans lequel le processeur de poids d'antenne (415 ; 515 ; 615 ; 715) permet de déterminer un coefficient de pondération composite spécifique de la branche de signal $w_a$ de la branche de signal *a* correspondant à

$$w_a = \sum_{m=0}^{M-1} e^{j\varphi_m} w_{a,m} \, , \, a = [0, \, 1, \, \dots, \, A\text{-}1],$$

où A désigne le nombre de branches de signal associées aux au moins deux éléments d'antenne, M désigne le nombre de lobes principaux, $\varphi_m \in [0, 2\pi]$ désigne un terme de phase correspondant au lobe principal m, et $w_{a,m}$ désigne le coefficient de pondération spécifique du lobe principal à valeurs complexes de la branche de signal *a* et du lobe principal m.

3. Appareil (400 ; 500; 600; 700) selon la revendication 1, dans lequel un premier diagramme de faisceau parmi les au moins deux diagrammes de faisceau individuels (480-m) présente un premier lobe principal (485-m) avec une inclinaison vers le bas différente de celle d'un deuxième lobe principal (485-m) d'un deuxième diagramme de faisceau parmi les au moins deux diagrammes de faisceau individuels (480-m).

4. Appareil (400 ; 500 ; 600 ; 700) selon la revendication 1, dans lequel le processeur de poids d'antenne (415 ; 515 ; 615 ; 715) permet de déterminer les coefficients de pondération composites spécifiques de la branche de signal ($w_a$) de sorte qu'un premier coefficient de pondération composite spécifique de la branche de signal d'une première branche de signal présente une amplitude différente de celle d'un deuxième coefficient de pondération composite spécifique de la branche de signal d'une deuxième branche de signal.

5. Appareil (400 ; 500 ; 600 ; 700) selon la revendication 1, dans lequel le processeur de poids d'antenne (415 ; 515 ; 615 ; 715) permet de déterminer un coefficient de pondération composite spécifique de la branche de signal $w_a$ dépendant du temps de la branche de signal *a* correspondant à

$$w_a(t) = \sum_{m=0}^{M-1} e^{j\varphi_m(t)} w_{a,m} \, , \, a = [0, \, 1, \, \dots, \, A\text{-}1],$$

où *A* désigne le nombre de branches de signal associées aux au moins deux éléments d'antenne, *M* désigne le nombre de lobes principaux, $\varphi_m(t) \in [0, 2\pi]$ désigne un terme de phase dépendant du temps correspondant au lobe principal m, et $w_{a,m}$ désigne un coefficient de pondération spécifique du lobe principal à valeurs complexes de la branche de signal a et du lobe principal *m*.

6. Appareil (400 ; 500 ; 600 ; 700) selon la revendication 5, dans lequel le processeur de poids d'antenne (415 ; 515 ; 615 ; 715) permet de changer le terme de phase dépendant du temps $\varphi_m(t)$ correspondant au lobe principal *m* dans le temps, respectivement, de sorte que, en moyenne, une utilisation de puissance égale soit obtenue parmi les branches de signal.

7. Appareil (400 ; 500 ; 600 ; 700) selon la revendication 1, dans lequel le processeur de poids d'antenne (415 ; 515 ; 615 ; 715) permet de déterminer chaque coefficient de pondération composite spécifique de la branche de signal ($w_a$) sur la base d'une superposition à sélection de fréquence des au moins deux coefficients de pondération spécifiques du lobe principal ($w_{a,m}$), de sorte que le diagramme de faisceau composite résultant (480) soit dépendant de la fréquence.

8. Appareil (400 ; 500 ; 600 ; 700) selon la revendication 7, dans lequel le processeur de poids d'antenne (415 ; 515 ; 615 ; 715) permet de déterminer un coefficient de pondération composite spécifique de la branche de signal à sélection de fréquence $w_a(f)$ de la branche de signal *a* correspondant à

$$w_a(f) = \sum_{m=0}^{M-1} e^{j\varphi_m(f)} w_{a,m} \ , \ a = [0, 1, \ldots, A\text{-}1],$$

où A désigne le nombre de branches de signal associées aux au moins deux éléments d'antenne, *M* désigne le nombre de lobes principaux, $\varphi_m(f) \in [0, 2\pi]$ désigne un terme de phase correspondant au lobe principal *m* et dépendant de la fréquence *f* et $w_{a,m}$ désigne un coefficient de pondération spécifique du lobe principal à valeurs complexes indépendant de la fréquence de la branche de signal *a* et du lobe principal *m*.

9. Appareil (400 ; 500 ; 600 ; 700) selon la revendication 8, dans lequel le processeur de poids d'antenne (415 ; 515 ; 615 ; 715) permet de déterminer le terme de phase $\varphi_m(f)$ correspondant au lobe principal *m* et dépendant de la fréquence *f* sur la base d'une relation entre la fréquence *f* et une largeur de bande du signal utile du signal numérique de bande de base et sur la base d'une relation entre le lobe principal *m* et un nombre total de lobes principaux (485-*m*).

10. Appareil (400 ; 500 ; 600 ; 700) selon la revendication 8, dans lequel le processeur de poids d'antenne (415 ; 515 ; 615 ; 715) permet de déterminer le terme de phase $\varphi_m(f)$ correspondant au lobe principal *m* et dépendant de la fréquence *f*, respectivement, de sorte que, en moyenne, une utilisation de puissance égale soit obtenue parmi les branches de signal.

11. Appareil (400 ; 500 ; 600 ; 700) selon la revendication 7, dans lequel le processeur de poids d'antenne (415 ; 515 ; 615 ; 715) comprend, pour chacun des au moins deux coefficients de pondération composites spécifiques de la branche de signal ($w_a$), au moins une structure de filtre à réponse impulsionnelle finie (FIR) (616 ; 716), pour déterminer la superposition à sélection de fréquence des au moins deux coefficients de pondération spécifiques du lobe principal ($w_a$) dans le domaine temporel.

12. Appareil (400 ; 500 ; 600 ; 700) selon la revendication 7, dans lequel le processeur de poids d'antenne est disposé entre un processeur de transformée de Fourier rapide (FFT) (505) et un processeur de transformée de Fourier rapide inverse (IFFT) (525) pour déterminer chacun des au moins deux coefficients de pondération composites spécifiques de la branche de signal ($w_a$) sur la base de la somme pondérée à sélection de fréquence des au moins deux coefficients de pondération spécifiques du lobe principal ($w_{a,m}$) dans le domaine de fréquences.

13. Procédé pour fournir un diagramme de faisceau composite (480) pour au moins deux éléments d'antenne (160-*n*; 460-*n*) formant un réseau d'antennes (160), couplé à au moins deux branches de signal (410-a) d'un signal (410), le diagramme de faisceau composite (480) ayant au moins deux lobes principaux (485-*m*) pointant dans des directions spatiales différentes, le procédé comprenant les étapes suivantes :

   former le diagramme de faisceau composite (480) pour le signal (410) en superposant au moins deux diagrammes de faisceau individuels (480-m) fournis par les au moins deux éléments d'antenne (160-*n* ; 460-*n*), dans lequel chacun des au moins deux diagrammes de faisceau individuels (480-m) présente un lobe principal (485-

m), dans lequel les au moins deux lobes principaux (485-*m*) des au moins deux diagrammes de faisceau individuels (480-*m*) pointent dans des directions spatiales différentes, respectivement, et **caractérisé en ce que** la formation du diagramme de faisceau composite (480) comprend la détermination, pour chacune des au moins deux branches de signal (410-*a*), d'un coefficient de pondération composite spécifique de la branche de signal ($w_a$) pour le signal (410),

dans lequel chaque coefficient de pondération composite spécifique de la branche de signal ($w_a$) est déterminé comme correspondant à une superposition d'au moins deux coefficients de pondération spécifiques du lobe principal à valeurs complexes ($w_{a,m}$),

dans lequel une phase d'un coefficient de pondération spécifique du lobe principal ($w_{a,m}$) est mise en rotation par une quantité de rotation de phase spécifique du lobe principal supplémentaire ($e^{j\varphi m}$), dans lequel chaque coefficient de pondération spécifique du lobe principal ($w_{a,m}$) correspond à un lobe différent des au moins deux lobes principaux uniques (485-*m*),

dans lequel le réseau d'antennes (160) est couplé à au moins trois branches de signal (410-*a*) du signal (410), et dans lequel la détermination d'un coefficient de pondération composite spécifique de la branche de signal ($w_a$) comprend la détermination d'au moins une quantité de rotation de phase supplémentaire ($e^{j\varphi m}$) correspondant au lobe principal *m,* de sorte que le coefficient de pondération composite spécifique de la branche de signal $w_a$ de la branche de signal *a* devienne sensiblement nul au cas où la branche de signal a connaîtrait un dysfonctionnement.

**14.** Programme informatique possédant un code de programme pour exécuter le procédé selon la revendication 13, lorsque le programme informatique est exécuté sur un ordinateur ou un processeur.

Fig. 1

Fig. 2a

Fig. 2b

Fig. 2c

Fig. 3

Fig. 4

Fig. 5

Fig. 6a

Fig. 6b

Fig. 6c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2009811 A1
- EP 2149992 A1

- US 2009058725 A1